# EUROPEAN PATENT APPLICATION

(11) **EP 3 357 866 A1**
(43) Date of publication of application: **08.08.2018**
(21) Application number: 16851807.4
(22) Date of filing: 29.09.2016
(51) Int. Cl.: C01G 25/02, C04B 35/48, C04B 35/628

(54) **ZIRCONIUM OXIDE NANOPARTICLES**

(30) Priority: 30.09.2015 JP 2015194172; 01.03.2016 JP 2016039322; 01.03.2016 JP 2016039323; 31.05.2016 JP 2016108539
(71) Applicant: Nippon Shokubai Co., Ltd., Osaka-shi, Osaka 541-0043 (JP)
(72) Inventor: YAO, Tomoyuki, Suita-shi Osaka 564-8512 (JP); KIMURA, Junya, Suita-shi Osaka 564-8512 (JP); TAKAHASHI, Kunio, Suita-shi Osaka 564-8512 (JP); AKATSUKA, Takeo, Himeji-shi Hyogo 671-1292 (JP)
(74) Representative: Müller-Boré & Partner Patentanwälte PartG mbB
(86) International application number: PCT/JP2016/078932
(87) International publication number: WO 2017/057636

(57) **Abstract**

An object of the present invention is to easily obtain zirconium oxide particles that contain a metallic element such as a rare earth oxide (preferably stabilized with a metallic element) and exhibit good dispersibility in organic media, without using an aqueous sulfate solution such as an aqueous solution of MgSO₄, or using a reduced amount of the aqueous sulfate solution. The present invention is a zirconium oxide nanoparticle coated with a first carboxylic acid that is at least one of primary carboxylic acids and secondary carboxylic acids and has 3 or more carbon atoms, wherein the zirconium oxide nanoparticle comprises at least one selected from the group M consisting of rare earth elements, Al, Fe, Co, Sn, Zn, In, Bi, Mn, Ni, and Cu.

## Description

### TECHNICAL FIELD

The present invention relates to zirconium oxide nanoparticles.

In recent years, nanoparticles of metal oxide, which have the possibility of exhibiting various functions in optical materials, medicines, ceramics, electronic component materials and the like, have attracted attention in the field of various functional materials. However, since the dispersibility of metal oxide alone in organic media is insufficient, agglomeration tends to occur in many cases, causing problems such as reduction in transparency and reduction in mechanical strength. In order to impart good dispersibility to organic media, a method of chemically bonding an organic group to a metal oxide has been proposed.

For example, Patent Document 1 discloses a zirconium oxide nanoparticle coated with two or more coating agents, at least one of the coating agents being represented by a formula of R¹-COOH (R¹ is a hydrocarbon group having 6 or more carbon atoms), and discloses that such a zirconium oxide nanoparticle can improve the dispersibility in a nonpolar solvent or the like. As the coating agent represented by the above formula, neodecanoic acid is disclosed in Examples of Patent Document 1.

In addition, the function of a single metal oxide nanoparticle is limited, and a complex oxide nanoparticle having a possibility of exhibiting more specific performance has been attracting attention.

In recent years, techniques for stabilizing metal oxide particles with a rare earth oxide have been proposed. The neodecanoic acid disclosed in Patent Document 1 is classified as a tertiary carboxylic acid, and Non-Patent Document 1 discloses zirconia fine particles stabilized with a rare earth oxide (yttrium oxide), which is produced from a metal complex of a tertiary carboxylic acid as a starting material. Non-Patent Document 1 discloses that zirconia particles are produced by hydrothermal synthesis, with an aqueous solution of MgSO₄, of a solution in which Y(III)-carboxylate is mixed with Zr(IV)-carboxylate at a predetermined ratio as a starting material.

Furthermore, as complex oxide nanoparticles, for example, Patent Document 2 discloses a stabilized zirconia fine particle containing yttrium or the like. In addition, Patent Document 3 discloses a zirconium oxide dispersion containing aluminum, magnesium, titanium or yttrium as a stabilizing element.

In addition, zirconia nanoparticles are expected to be applied to ceramic materials. For example, Patent Documents 4 to 6 each disclose colored stabilized zirconia sintered bodies. In any of Patent Documents 4 to 6, plural kinds of metal oxides are separately prepared as raw materials, and these metal oxides are mixed in a ball mill or the like, and then molded and sintered. However, when plural kinds of raw materials are separately prepared and mixed, different kinds of raw materials are ununiformly mixed, and when a ball mill is used, it often happens that impurities derived from the mill are mixed or the particle diameter becomes ununiform. The ceramics sintered by such a method have problems such as non-uniform coloration and low transparency due to grain boundaries.

### PRIOR ART DOCUMENTS

### PATENT DOCUMENTS

Patent Document 1: JP-A-2008-44835
Patent Document 2: JP-A-2008-184339
Patent Document 3: JP-A-2014-80361
Patent Document 4: JP-A-2010-501465
Patent Document 5: JP-A-2012-116745
Patent Document 6: JP-A-2013-230981

### NON-PATENT DOCUMENT

Non-Patent Document 1: "Rare-Earth Oxide Stabilized Zirconia Fine Particles Produced from Metal Carboxylate as Starting Material", Summary of Speeches at the Annual Autumn Meeting of the Society of Chemical Engineers, the Society of Chemical Engineers, Japan, 2001, vol. 34, p. 16.

### SUMMARY OF THE INVENTION

### PROBLEMS TO BE SOLVED BY THE INVENTION

A first object of the present invention is to easily obtain zirconium oxide particles that contain a metallic element such as a rare earth oxide (preferably stabilized with a metallic element) and exhibit good dispersibility in organic media, without using an aqueous sulfate solution such as an aqueous solution of MgSO₄ disclosed in the aforementioned Non-Patent Document 1, or using a reduced amount of the aqueous sulfate solution.

It is not clear whether or not complex oxide nanoparticles complexed with zirconium oxide can be obtained for elements other than the stabilizing elements disclosed in Patent Documents 2 and 3, and furthermore, it is not clear whether or not such complex oxide nanoparticles coated with a coating agent can be realized.

Therefore, a second object of the present invention is to find elements capable of complexing with zirconium oxide nanoparticles, and to provide complex zirconium oxide nanoparticles coated with a coating agent.

Furthermore, a third object of the present invention in a preferred embodiment is to provide zirconium oxide nanoparticles useful as a precursor (raw material) of ceramics excellent in transparency and uniformity of coloration.

### SOLUTIONS TO THE PROBLEMS

The present inventions are as follows.
(1) A zirconium oxide nanoparticle coated with a first carboxylic acid that is at least one of primary carboxylic acids and secondary carboxylic acids and has 3 or more carbon atoms, wherein
   the zirconium oxide nanoparticle comprises at least one selected from the group M consisting of rare earth elements, Al, Fe, Co, Sn, Zn, In, Bi, Mn, Ni, and Cu.
(2) The zirconium oxide nanoparticle according to (1), wherein the first carboxylic acid is at least one selected from the group consisting of secondary carboxylic acids, carboxylic acids in which at least one carbon atom other than one at α-position is branched, and linear carboxylic acids having 4 to 20 carbon atoms.
(3) The zirconium oxide nanoparticle according to (1) or (2), comprising at least one selected from the group consisting of Y, Al, La, Ce and In, among the elements belonging to the group M.
(4) The zirconium oxide nanoparticle according to (1) or (2), comprising Y, and further comprising at least one selected from the group consisting of Fe, Co, Mn, Ni and Cu, among the elements belonging to the group M.
(5) The zirconium oxide nanoparticle according to (1) or (2), comprising at least one selected from the group Mₐ consisting of rare earth elements and Al, among the elements belonging to the group M, wherein a total content of elements belonging to the group Mₐ is 0.1% by mass or more in terms of a ratio to a total content of the elements belonging to the group Mₐ and zirconium.
(6) The zirconium oxide nanoparticle according to (1) or (2), comprising at least one selected from the group M_{b} consisting of La, Ce, Fe, Co, Sn, Zn, In, Bi, Mn, Ni and Cu, among the elements belonging to the group M, wherein a total content of elements belonging to the group M_{b} is 0.1 to 20% by mass in terms of a ratio to a total content of the elements belonging to the group M_{b} and zirconium.
(7) The zirconium oxide nanoparticle according to any of (1) to (6), wherein the zirconium oxide nanoparticle is coated with at least one selected from the group consisting of organic acids other than the first carboxylic acid, silane-coupling agents, surfactants, organophosphorus compounds, and organosulfur compounds.
(8) The zirconium oxide nanoparticle according to any of (1) to (7), wherein the zirconium oxide nanoparticle is a precursor to a fired body of zirconium oxide.
(9) A dispersion comprising the zirconium oxide nanoparticle according to any of (1) to (8).
(10) A resin composition comprising the zirconium oxide nanoparticle according to any of (1) to (8).
(11) A molded material comprising the zirconium oxide nanoparticle according to any of (1) to (8).
(12) A ceramic material obtained from the zirconium oxide nanoparticle according to any of (1) to (8).
(13) A process for producing a ceramic material, comprising firing the zirconium oxide nanoparticle according to any of (1) to (8) at 500° C or more.
(14) A method for producing a ceramic material, comprising firing a composition containing the zirconium oxide nanoparticle according to any of (1) to (8) at 500° C or more.
(15) A process for producing the zirconium oxide nanoparticle according to any of (1) to (8), comprising,
   hydrothermal synthesizing a zirconium source material and a source material of the elements belonging to the group M without using MgSO₄, wherein,
   the zirconium source material comprising the first carboxylic acid, and either zirconium or a zirconium-containing compound; and
   the source material of the elements belonging to the group M comprising the first carboxylic acid, and at least one of the elements belonging to the group M and compounds containing the elements belonging to the group M.

### EFFECTS OF THE INVENTION

The present invention can provide zirconium oxide nanoparticles coated with a coating agent and containing at least one selected from the group M consisting of rare earth elements, Al, Fe, Co, Sn, Zn, In, Bi, Mn, Ni and Cu.

Further, in the present invention, since a specific carboxylic acid is used, zirconium oxide nanoparticles coated with a carboxylic acid and containing a predetermined metallic element such as a rare earth element can be easily obtained without using MgSO₄ or the like or using a reduced amount of MgSO₄. Such zirconium oxide nanoparticles include a specific carboxylic acid, and thus exhibit good dispersibility in organic media. In a preferred embodiment, the zirconium oxide nanoparticles also contain a specific metallic element (at least one of aluminum, yttrium, lanthanum, cerium and indium) among the metallic elements, thereby having a stable crystal structure, so that a change in crystal structure can be suppressed when the zirconium oxide nanoparticle is fired.

Furthermore, a preferred embodiment of the present invention can realize zirconium oxide nanoparticles that contain a transition metal element (specifically, at least one selected from the group consisting of Fe, Co, Mn, Ni and Cu) together with yttrium and are coated with a carboxylic acid, and a ceramic which is produced by firing such nanoparticles (also including sintered ceramic, the same applies hereinafter.) is excellent in transparency and uniformity of coloration.

### BRIEF DESCRIPTION OF THE DRAWINGS

Fig. 1 shows X-ray diffraction charts of lanthanum-containing zirconia nanoparticles.
Fig. 2 shows X-ray diffraction charts of tin-containing zirconia nanoparticles.
Fig. 3 shows X-ray diffraction charts of zinc-containing zirconia nanoparticles.
Fig. 4 shows X-ray diffraction charts of cerium-containing zirconia nanoparticles.
Fig. 5 shows X-ray diffraction charts of indium-containing zirconia nanoparticles.
Fig. 6 shows X-ray diffraction charts of bismuth-containing zirconia nanoparticles.
Fig. 7 shows X-ray diffraction charts of iron-containing zirconia nanoparticles.
Fig. 8 shows a graph illustrating the absorbance of zirconium oxide ceramics obtained by firing the zirconium oxide nanoparticles of the present invention.
Fig. 9 shows graphs illustrating X-ray diffraction patterns of samples after firing in Examples and Comparative Examples.

### MODE FOR CARRYING OUT THE INVENTION

Since the zirconium oxide nanoparticles of the present invention are coated with a specific first carboxylic acid, they have good dispersibility in organic media such as solvents and resins. In addition, since the specific first carboxylic acid is used, the zirconium oxide nanoparticles can be obtained by hydrothermal synthesis, even without using an aqueous solution of MgSO₄ that is required when a metal complex of a tertiary carboxylic acid as described in the Non-Patent Document 1 is used as a starting material and that performs a catalytic function.

The first carboxylic acid in the present invention is at least one of primary carboxylic acids and secondary carboxylic acids, and has 3 or more carbon atoms (except for formic acid and acetic acid). The carbon number of the first carboxylic acid is preferably 4 or more, and more preferably 5 or more. The upper limit of the number of carbon atoms is not particularly limited, but is, for example, 22 or less, preferably 20 or less, and more preferably 18 or less. A primary carboxylic acid means a carboxylic acid in which the carbon atom adjacent to a carboxyl group is bonded to one carbon atom and two hydrogen atoms, a secondary carboxylic acid means a carboxylic acid in which the carbon atom adjacent to a carboxyl group is bonded to two carbon atoms and one hydrogen atom, and a tertiary carboxylic acid means a carboxylic acid in which the carbon atom adjacent to a carboxyl group is bonded to three carbon atoms.

Examples of the primary carboxylic acid include linear primary carboxylic acids and branched primary carboxylic acids (that is, carboxylic acids in which at least one carbon atom other than one at α-position is branched), and in particular, linear primary carboxylic acids having 4 or more (more preferably 5 or more, and even more preferably 8 or more) and 20 or less carbon atoms, and carboxylic acids in which at least one carbon atom other than one at α-position is branched are preferable.

The first carboxylic acid is preferably a secondary carboxylic acid, a carboxylic acid in which at least one carbon atom other than one at α-position is branched, or a linear carboxylic acid having 4 to 20 carbon atoms, and the zirconium oxide nanoparticles are preferably coated with at least one of them. Among them, the zirconium oxide nanoparticles are more preferably coated with at least one of secondary carboxylic acids and carboxylic acids in which at least one carbon atom other than one at α-position is branched, and even more preferably coated with a secondary carboxylic acid.

As for secondary carboxylic acids, a secondary carboxylic acid having 4 to 20 carbon atoms is preferable, and a secondary carboxylic acid having 5 to 18 carbon atoms is more preferable, and specific examples thereof include isobutyric acid, 2-methylbutyric acid, 2-ethylbutyric acid, 2-ethylhexanoic acid, 2-methylvaleric acid, 2-methylhexanoic acid, 2-methylheptanoic acid, 2-propylbutyric acid, 2-hexylvaleric acid, 2-propylbutyric acid, 2-hexyldecanoic acid, 2-heptylundecanoic acid, 2-methylhexadecanoic acid, and 4-methylcyclohexacarboxylic acid. In particular, at least one of 2-ethylhexanoic acid and 2-hexyldecanoic acid is preferable, and 2-ethylhexanoic acid is particularly preferable.

The carboxylic acids in which at least one carbon atom other than one at α-position is branched are carboxylic acids having a carboxyl group bonded to a hydrocarbon group, wherein at least one carbon atom other than ones at α-position of the hydrocarbon group is branched. The carbon number of such carboxylic acids are preferably 4 to 20, and more preferably 5 to 18, and examples of such a carboxylic acid include isovaleric acid, 3,3-dimethylbutyric acid, 3-methylvaleric acid, isononanoic acid, 4-methylvaleric acid, 4-methyl-n-octanoic acid, and naphthenic acid.

The carbon number of the linear carboxylic acids having 4 to 20 carbon atoms (preferably linear saturated aliphatic carboxylic acids) is preferably 5 or more, and more preferably 8 or more. Examples of the linear carboxylic acids having 4 to 20 carbon atoms include butyric acid, valeric acid, hexanoic acid, heptanoic acid, caprylic acid, nonanoic acid, decanoic acid, lauric acid, tetradecanoic acid, stearic acid, oleic acid, and ricinoleic acid. Caprylic acid, lauric acid, stearic acid, oleic acid and ricinoleic acid are preferable.

The amount of the first carboxylic acid is, for example, 5 to 40% by mass (the lower limit is preferably 8% by mass or more, more preferably 10% by mass or more, and even more preferably 13% by mass or more, and the upper limit is preferably 35% by mass or less, more preferably 30% by mass or less, and even more preferably 25% by mass or less), relative to the zirconium oxide nanoparticles coated with the first carboxylic acid. When the zirconium oxide nanoparticles of the present invention are further coated with the organic acid other than the first carboxylic acid described later, the total amount of the first carboxylic acid and the organic acid other than the first carboxylic acid should be within the above range.

Incidentally, the expression "the zirconium oxide nanoparticles of the present invention are coated with the first carboxylic acid" includes both states of chemical and physical bonding of the first carboxylic acid and the zirconium oxide nanoparticles, and the expression means that the zirconium oxide nanoparticles of the present invention are coated with the first carboxylic acid and/or a carboxylate derived from the first carboxylic acid.

The zirconium oxide nanoparticles of the present invention contain at least one selected from the group M consisting of rare earth elements, Al, Fe, Co, Sn, Zn, In, Bi, Mn, Ni and Cu (hereinafter, the elements belonging to the group M may be referred to as metallic elements M) and are also coated with the above first carboxylic acid, and such zirconium oxide nanoparticles have not yet been realized. It is preferable that the zirconium oxide nanoparticles of the present invention contain, among the metallic elements M, at least one of Y, La, Ce, Fe, Co, Sn, Zn, In, Bi, Mn, Ni and Cu. In another preferred embodiment, it is preferable to contain, among the metallic elements M, at least one selected from the group consisting of rare earth elements, Al and In, and in particular, it is more preferable to contain one selected from the group consisting of Y (yttrium), Al, La, Ce and In (hereinafter may be referred to as a crystal structure stabilizing element), and it is even more preferable to contain at least one of Y, La and Ce, and in these embodiments, the crystal structure in a zirconium oxide crystal is stable. That is, the zirconium oxide nanoparticles of the present invention containing a crystal structure stabilizing element can increase a proportion of tetragonal and/or cubic crystals, and also can suppress a decrease in tetragonal crystals when the zirconium oxide nanoparticles are fired, thus can increase a proportion of tetragonal crystals after being fired. Incidentally, rare earth elements include Sc, Y (yttrium) and lanthanoid elements having atomic number 57 (La) to atomic number 71 (Lu).

The proportion of zirconium contained in the zirconium oxide nanoparticles of the present invention is, for example, 70% by mass or more, preferably 73% by mass or more, more preferably 75% by mass or more, and particularly preferably 80% by mass or more, relative to the total of all metallic elements contained in the zirconium nanoparticles. As to the metallic elements contained in the zirconium oxide nanoparticles of the present invention, metallic elements other than both zirconium and the metallic elements M can be obtained. The metallic elements excluding both zirconium and the metallic elements M are usually metallic elements of Group 3 or later of the periodic table, and the total content thereof is not particularly limited, but it is, for example, 5% by mass or less, preferably 3% by mass or less, more preferably 2% by mass or less, even more preferably 1% by mass or less, and may be 0% by mass, relative to the total of all metallic elements.

Examples of preferred combinations of the metallic elements M contained in the zirconium oxide nanoparticles of the present invention include (a) at least one selected from the group consisting of rare earth elements and Al, (b) at least one selected from the group consisting of La, Ce, Fe, Co, Sn, Zn, In, Bi, Mn, Ni and Cu, and (c) Y and at least one transition metals selected from the group consisting of Fe, Co, Mn, Ni and Cu.

### (a) At least one selected from the group consisting of rare earth elements and Al

It is also preferable that the zirconium oxide nanoparticles of the present invention contain, among the metallic elements M (that is, among elements belonging to the group M), at least one selected from the group Mₐ consisting of rare earth elements and Al (hereinafter may be referred to as metallic elements Ma). In this case, it is more preferable to contain one or more of Y (yttrium), La and Ce as essential components, and it is even more preferable to contain yttrium as an essential component. The zirconium oxide nanoparticles of the present invention may contain yttrium as an essential component and may further contain, among Al and rare earth elements, one or more of Al, La, Yb, Sc, Ce and Er (more preferably one or more of Al, Sc, Er).

In particular, when the zirconium oxide nanoparticles of the present invention contain the metallic elements Mₐ, the zirconium oxide nanoparticles are preferably coated with a secondary carboxylic acid as the first carboxylic acid, and the zirconium oxide nanoparticles more preferably contain at least one of Al and Y (in particular, essentially contain yttrium) and are also coated with a secondary carboxylic acid as the first carboxylic acid.

The content of the metallic elements Mₐ (Al and rare earth elements) (the total content when two or more of the metallic elements Mₐ are contained) is, for example, 0.1 to 20% by mass, preferably 0.5% by mass or more, more preferably 1% by mass or more, even more preferably 3% by mass or more, particularly preferably 4% by mass or more, and most preferably 5% by mass or more, in terms of the proportion to the total amount of zirconium of zirconium oxide and the metallic elements Mₐ (Al and rare earth elements). In particular, by setting the content of the metallic elements Mₐ to 3% by mass or more, the proportion of the tetragonal crystals after the zirconium oxide nanoparticles are fired can be increased as compared with the proportion before being fired.

When the zirconium oxide nanoparticles of the present invention contain the metallic elements Mₐ, the proportion of zirconium contained in the zirconium oxide nanoparticles of the present invention is, for example, 80% by mass or more, relative to the total of all metallic elements contained in the zirconium nanoparticles. As for the metallic elements contained in the zirconium oxide nanoparticles of the present invention, metallic elements other than zirconium, Al and rare earth elements may be contained. The metallic elements excluding zirconium, Al and rare earth elements are usually metallic elements of Group 3 or later of the periodic table, and the total content thereof is not particularly limited, but it is, for example, 3% by mass or less, preferably 2% by mass or less, more preferably 1% by mass or less, and may be 0% by mass.

Also, when the zirconium oxide nanoparticles of the present invention contain the metallic elements Mₐ, the amount of the first carboxylic acid is, for example, 5 to 25% by mass (preferably 10% by mass or more, and more preferably 13% by mass or more), relative to the zirconium oxide nanoparticles coated with the first carboxylic acid.

### (b) At least one selected from the group M_{b} consisting of La, Ce, Fe, Co, Sn, Zn, In, Bi, Mn, Ni and Cu

It is also preferable that the zirconium oxide nanoparticles of the present invention contain, among the metallic elements M, at least one metallic element selected from the group M_{b} consisting of La, Ce, Fe, Co, Sn, Zn, In, Bi, Mn, Ni and Cu (hereinafter may be referred to as metallic elements M_{b}) (provided that yttrium is not contained in this case. While Yttrium is not contained, Al, La and Ce may not be contained, and also Al and rare earth elements may not be contained.). The total content of the metallic elements M_{b} is preferably 0.1 to 20% by mass, and more preferably 1 to 15% by mass, in terms of the proportion to the total content of the metallic elements M_{b} and zirconium.

More specifically, the content of La is preferably 0.1 to 20% by mass, and more preferably 1 to 15% by mass, relative to the total of La and zirconium.

The content of Ce is preferably 0.1 to 20% by mass, and more preferably 1 to 15% by mass, relative to the total of Ce and zirconium.

The content of Fe is preferably 0.1 to 15% by mass, and more preferably 0.5 to 10% by mass, relative to the total of Fe and zirconium.

The content of Co is preferably 0.1 to 20% by mass, and more preferably 1 to 15% by mass, relative to the total of Co and zirconium.

The content of Sn is preferably 0.1 to 20% by mass, and more preferably 1 to 15% by mass, relative to the total of Sn and zirconium.

The content of Zn is preferably 0.1 to 20% by mass, and more preferably 1 to 15% by mass, relative to the total of Zn and zirconium.

The content of In is preferably 0.1 to 20% by mass, and more preferably 1 to 15% by mass, relative to the total of In and zirconium.

The content of Bi is preferably 0.1 to 20% by mass, and more preferably 1 to 15% by mass, relative to the total of Bi and zirconium.

The content of Mn is preferably 0.1 to 15% by mass, and more preferably 0.5 to 10% by mass, relative to the total of Mn and zirconium.

The content of Ni is preferably 0.1 to 15% by mass, and more preferably 0.5 to 10% by mass, relative to the total of Ni and zirconium.

The content of Cu is preferably 0.1 to 15% by mass, and more preferably 0.5 to 10% by mass, relative to the total of Cu and zirconium.

The metallic elements M_{b} exists as a complex oxide of zirconium and the metallic elements M_{b} in the zirconium oxide nanoparticles. Among these metallic elements M_{b}, in particular as to lanthanum, cerium and indium, tetragonal zirconium oxide was mainly detected also after the zirconium oxide nanoparticles were fired described later, so that these elements have the effect of stabilizing zirconium oxide as with yttrium.

When the zirconium oxide nanoparticles of the present invention contain the metallic elements M_{b}, the proportion of zirconium contained in the zirconium oxide nanoparticles is, for example, 70% by mass or more, preferably 73% by mass or more, and more preferably 75% by mass or more, relative to the total of all metallic elements contained in the zirconium nanoparticles. Also, as for the metallic elements contained in the zirconium oxide nanoparticles of the present invention, metallic elements other than the metallic elements M_{b} (La, Ce, Fe, Co, Sn, Zn, In, Bi, Mn, Ni and Cu) may be contained (provided that yttrium is not contained)" and such other metallic elements are usually metallic elements of Group 3 or later of the periodic table. The total amount of the other metallic elements is, for example, 5% by mass or less, more preferably 2% by mass or less, and may be 0% by mass, relative to the total of all metallic elements contained in the zirconium nanoparticles.

When the zirconium oxide nanoparticles of the present invention contain an element of the M_{b} group, the amount of the first carboxylic acid is, for example, 5 to 40% by mass (preferably 8 to 35% by mass, and more preferably 10 to 30% by mass), relative to the zirconium oxide nanoparticles coated with the first carboxylic acid.

When the zirconium oxide nanoparticles of the present invention contain the metallic elements M_{b}, a ceramic material obtained by firing the zirconium oxide nanoparticles has a uniform particle size, thus has good ceramic properties such as translucency, toughness, and strength.

### (c) Y and at least one transition metal selected from the group consisting of Fe, Co, Mn, Ni and Cu

It is also preferable that the zirconium oxide nanoparticles of the present invention contain, among the metallic elements M, at least one transition metal selected from the group consisting of Fe, Co, Mn, Ni and Cu together with yttrium. In this embodiment, the zirconium oxide nanoparticles contain yttrium (for example, contain yttrium as yttria), and the crystal structure in a zirconium oxide crystal is stable. That is, it is possible to increase the proportion of tetragonal and/or cubic crystals in the zirconium oxide nanoparticles of the present invention and possible to suppress a decrease in tetragonal and/or cubic crystals when the zirconium oxide nanoparticles are fired, thus possible to increase the proportion of tetragonal and/or cubic crystals after being fired. Furthermore, in the present invention, since the zirconium oxide nanoparticles contain a transition metal, a ceramic obtained by firing the nanoparticles is colored. Further, the zirconium oxide nanoparticles themselves contain a transition metal, and therefore, the ceramic obtained by firing the nanoparticles uniformly colored and also it is possible to prevent reduction in strength of the sintered body due to grain boundaries with other oxides, as compared with the case where zirconium oxide and an oxide of a transition metal are separately prepared, mixed and fired.

The content of yttrium is preferably 0.5 to 30% by mass, more preferably 1 to 20% by mass, and even more preferably 1.5 to 15% by mass, in terms of the proportion to the total mass of zirconium, yttrium and the above-described transition metal in the zirconium oxide nanoparticles. If the amount of yttrium is too small, the stabilizing effect may not be sufficiently obtained, and if the amount of yttrium is too large, the original performance of zirconium oxide may not be sufficiently obtained.

The content of the above-described transition metal (total content when plural kinds of the transition metals are contained) is preferably 0.05 to 2% by mass, more preferably 0.1 to 1% by mass, and even more preferably 0.15 to 0.6% by mass, in terms of the proportion to the total mass of zirconium, yttrium and the transition metal in the zirconium oxide nanoparticles. If the amount of the transition metal is too small, the effect of the transition metal may not be sufficiently exhibited, and the coloration and the doping effect after the zirconium oxide nanoparticles are fired are not sufficiently exhibited. On the other hand, if the amount of the transition metal is too large, the stabilizing effect due to yttrium decreases, and the hardness and toughness after the zirconium oxide nanoparticles are fired are affected.

When the zirconium oxide nanoparticles of the present invention contain at least one transition metal together with yttrium, the proportion of zirconium contained in the zirconium oxide nanoparticles is, for example, 65% by mass or more, preferably 68% by mass or more, and more preferably 70% by mass or more, relative to the total of all metallic elements contained in the zirconium nanoparticles. Also, as for the metallic elements contained in the zirconium oxide nanoparticles of the present invention, metallic elements other than yttrium and the transition metals may be contained, and such other metallic elements are usually metallic elements of Group 3 or later of the periodic table. The total amount of the other metallic elements is, for example, 3% by mass or less, more preferably 2% by mass or less, and may be 0% by mass, relative to the total of all metallic elements contained in the zirconium nanoparticles.

When the zirconium oxide nanoparticles of the present invention contain at least one transition metal together with yttrium, the amount of the first carboxylic acid is, for example, 5 to 40% by mass (preferably 8 to 35% by mass, and more preferably 10 to 30% by mass), relative to the zirconium oxide nanoparticles coated with the first carboxylic acid.

The zirconium oxide particles of the present invention may be surface-modified with an organic acid other than the first carboxylic acid, a silane-coupling agent, a surfactant, an organophosphorus compound, an organosulfur compound or the like, by additionally providing the zirconium oxide particles coated with the first carboxylic acid obtained after the hydrothermal synthesis reaction with a surface treatment under normal temperature or heat. By providing the firstly obtained nanoparticles with the surface treatment again, it is possible to control miscibility with other substances, moldability and the like, and the zirconium oxide particles can be applied to various applications. Preferred organic acids, silane-coupling agents, surfactants, organophosphorus compounds and organosulfur compounds will be described below.

### <Organic Acid>

A carboxylic acid compound having a carboxyl group, other than the first carboxylic acid, is preferably used as the organic acid. A carboxylic acid compound is chemically bonded to zirconium oxide nanoparticles or forms a carboxylic acid or a salt thereof together with a hydrogen atom or cationic atom to attach onto zirconium oxide nanoparticles. Accordingly, the term "coated" as used in the present invention includes both states of chemical and physical bonding of the first carboxylic acid and the zirconium oxide nanoparticles.

The carboxylic acid compound having a carboxyl group, other than the first carboxylic acid, can be freely selected depending on the dispersibility in a solvent and the properties of the material other than zirconium oxide nanoparticles, and hydrocarbons having one or more (preferably one) carboxylic acid groups are preferably adopted, such as (meth)acrylic acids; carboxylic acids having one or more substituents selected from the group consisting of an ester group, an ether group, a hydroxyl group, an amino group, an amide group, a thioester group, a thioether group, a carbonate group, a urethane group and a urea group; linear carboxylic acids with 4 to 20 carbon atoms; branched carboxylic acids; cyclic carboxylic acids; or aromatic carboxylic acids.

Specific examples of such a carboxylic acid compound include (meth)acrylic acids (for example, acrylic acid, methacrylic acid, a (meth)acryloyloxy C₁₋₆ alkylcarboxylic acid such as 3-acryloyloxypropionic acid, and the like); carboxylic acids with an ester group, such as half esters of C₃₋₉ aliphatic dicarboxylic acids with a (meth)acryloyloxy C₁₋₆ alkyl alcohol (for example, 2-acryloyloxyethyl succinic acid, 2-methacryloyloxyethyl succinic acid, and the like), half esters of C₅₋₁₀ alicyclic dicarboxylic acids with a (meth)acryloyloxy C₁₋₆ alkyl alcohol (for example, 2-acryloyloxyethyl hexahydrophthalic acid, 2-methacryloyloxyethyl hexahydrophthalic acid, and the like), half esters of C₈₋₁₄ aromatic dicarboxylic acids with a (meth)acryloyloxy C₁₋₆ alkyl alcohol (for example, 2-acryloyloxyethyl phthalic acid, 2-methacryloyloxyethyl phthalic acid, and the like); branched carboxylic acids such as pivalic acid, 2,2-dimethylbutyric acid, 2,2-dimethylvaleric acid, 2,2-diethylbutyric acid, and neodecanoic acid; cyclic carboxylic acids such as naphthenic acid and cyclohexanedicarboxylic acids; carboxylic acids containing an ether group (methoxyacetic acid, ethoxyacetic acid, and the like); carboxylic acids containing a hydroxyl group (lactic acid, hydroxypropionic acid, and the like); and carboxylic acids containing an amino group (amino acids such as glycine, alanine, and cysteine).

The addition amount of the carboxylic acid compound is preferably 0.1 parts by mass or more and 30 parts by mass or less, relative to 100 parts by mass of the zirconium oxide nanoparticles.

### <Silane-Coupling Agent>

A compound having a hydrolyzable group of -Si-OR⁹ (R⁹ represents a methyl group or an ethyl group) is preferable as the silane-coupling agent. Examples of such a silane-coupling agent include a silane-coupling agent having a functional group and alkoxysilane.

Examples of the silane-coupling agent having a functional group include a silane-coupling agent represented by the following formula (1):

[X-(CH₂)ₘ]₄₋ₙ-Si-(OR⁹)ₙ ...( 1)

wherein X represents a functional group, R⁹ is the same as above, m represents an integer of 0 to 4, and n represents an integer of 1 to 3.

Examples of X include a vinyl group, an amino group, a (meth)acryloxy group, a mercapto group, and a glycidoxy group. Specific examples of the silane-coupling agent include silane-coupling agents in which the functional group X is a vinyl group, such as vinyltrimethoxysilane and vinyltriethoxysilane; silane-coupling agents in which the functional group X is an amino group, such as 3-aminopropyltrimethoxysilane, 3-aminopropyltriethoxysilane, N-2-(aminoethyl)-3-aminopropylmethyldimethoxysilane, and N-2-(aminoethyl)-3-aminopropylmethyltrimethoxysilane; silane-coupling agents in which the functional group X is a (meth)acryloxy group, such as 3-acryloxypropyltrimethoxysilane, 3-methacryloxypropyltrimethoxysilane, 3-methacryloxypropyltriethoxysilane, 3-methacryloxypropylmethyldimethoxysilane, and 3-methacryloxypropylmethyldiethoxysilane; silane-coupling agents in which the functional group X is a mercapto group, such as 3-mercaptopropyltrimethoxysilane and 3-mercaptopropyltriethoxysilane; and silane-coupling agents in which the functional group X is a glycidoxy group, such as 2-(3,4-epoxycyclohexyl)ethyltrimethoxysilane, 3-glycidoxypropyltrimethoxysilane, 3-glycidoxypropyltriethoxysilane, 3-glycidoxypropylmethyldimethoxysilane, and 3-glycidoxypropylmethyldiethoxysilane.

Examples of the alkoxysilane include alkyl group-containing alkoxysilanes in which an alkyl group is bonded directly to the silicon atom of the alkoxysilane, such as methyltrimethoxysilane, dimethyldimethoxysilane, trimethylmethoxysilane, propyltrimethoxysilane, butyltriethoxysilane, hexyltrimethoxysilane, hexyltriethoxysilane, octyltriethoxysilane, and decyltrimethoxysilane; and aryl group-containing alkoxysilanes in which an aromatic ring is bonded directly to the silicon atom of the alkoxysilane, such as phenyltrimethoxysilane, diphenyldimethoxysilane, and p-styryltrimethoxysilane.

As the silane-coupling agent, a silane-coupling agent in which the functional group X is a (meth)acryloxy group and an alkyl group-containing alkoxysilane are preferable among them, and particularly preferred are 3-acryloxypropyltrimethoxysilane, 3-methacryloxypropyltrimethoxysilane, hexyltrimethoxysilane, octyltriethoxysilane, and decyltrimethoxysilane.

As for the silane-coupling agent, a single silane-coupling agent may be used, and two or more of silane-coupling agents may also be used in combination. The amount (coating amount) of the silane-coupling agent is preferably 0.1 parts by mass or more and 30 parts by mass or less, relative to 100 parts by mass of the entire zirconium oxide nanoparticles.

### <Surfactant>

A surfactant makes it possible to improve transparency and dispersibility of a composition. It is also possible to achieve low viscosity of the composition. An ionic surfactant such as an anionic surfactant, a cationic surfactant, a zwitterionic surfactant or a nonionic surfactant is suitably used as the surfactant. Examples of the anionic surfactant include fatty acid-based anionic surfactants such as fatty acid sodium of sodium oleate, sodium stearate, and sodium laurate, fatty acid potassium, and fatty acid ester sodium sulfonate; phosphate-based anionic surfactants such as sodium alkyl phosphates; olefin-based anionic surfactants such as sodium alpha olefin sulfonates; alcohol-based anionic surfactants such as sodium alkylsulfates; and alkylbenzene-based anionic surfactants. Examples of the cationic surfactant include alkylmethylammonium chlorides, alkyldimethylammonium chlorides, alkyltrimethylammonium chlorides, and alkyldimethylbenzylammonium chlorides. Examples of the zwitterionic surfactant include carboxylic acid-based zwitterionic surfactants such as alkylaminocarboxylates and phosphate-based zwitterionic surfactants such as phosphobetaines. Examples of the nonionic surfactant include fatty-acid based nonionic surfactants such as polyoxyethylene lauric fatty acid esters and polyoxyethylene sorbitan fatty acid esters; polyoxyethylene alkylphenyl ethers; and fatty acid alkanol amides. The surfactant is preferably added in an amount of 0.1% by mass or more and 5% by mass or less, relative to 100% by mass of all components of the composition.

### <Organophosphorus Compound>

Examples of the organophosphorus compound include phosphate monoesters represented by the following formulas and phosphate diesters having the same substituent of the phosphate monoesters: 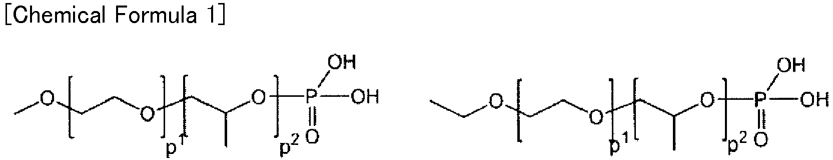 wherein p¹ and p² are each preferably 1 to 100, more preferably 1 to 50, even more preferably 1 to 30, and most preferably 4 to 15, and p¹ + p² is preferably 1 to 100, more preferably 1 to 50, and even more preferably 1 to 30.

In addition, examples of the organophosphorus compound include compounds such as phosphate monoesters and phosphate diesters represented by the following formula: 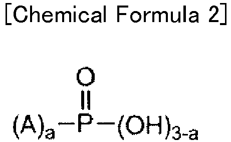 wherein a is 1 or 2, and A is at least one selected from a substituent group represented by the following formulas: 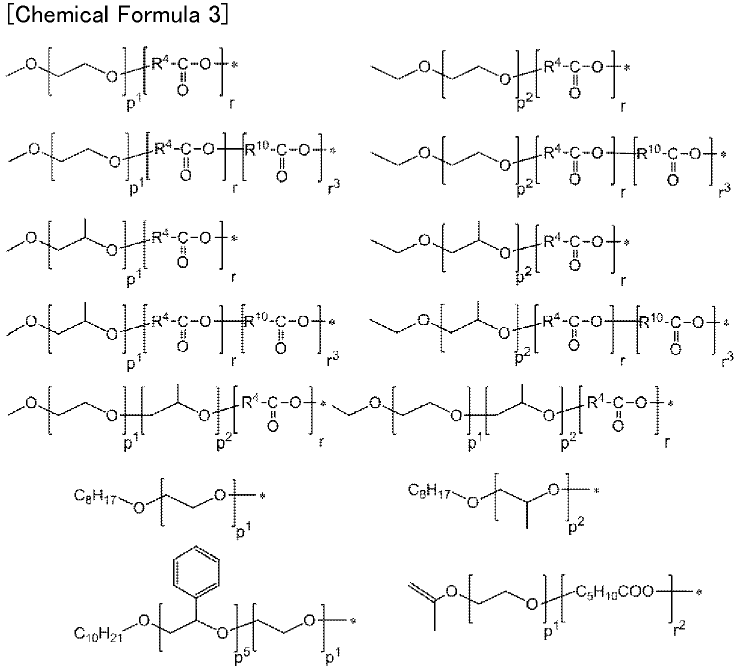 wherein p¹, p² and p⁵ are each preferably 1 to 100, more preferably 1 to 50, even more preferably from 1 to 30, and most preferably from 4 to 15, p¹ + p² + p⁵ is preferably 1 to 100, more preferably 1 to 50, and even more preferably 1 to 30, r, r² and r³ are preferably 1 to 100, more preferably 1 to 50, and even more preferably 1 to 20, R⁴ and R¹⁰ are each a divalent hydrocarbon group having 1 to 18 carbon atoms or a divalent aromatic group-containing hydrocarbon group having 6 to 30 carbon atoms, and * indicates a bonding site with a phosphorus atom. Examples of the organophosphorus compound include compounds such as compounds represented by the following formula: 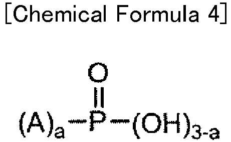 wherein a is 1 or 2, and A is at least one selected from a substituent group represented by the following formulas: 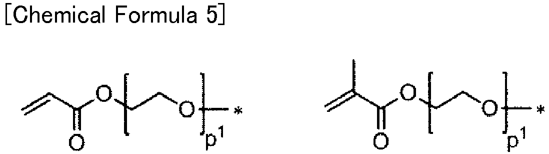 wherein p¹ is preferably 1 to 100, more preferably 1 to 50, and even more preferably from 1 to 30 (for example, compounds represented by the following formulas: 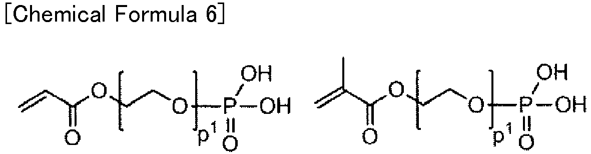 wherein p¹ is preferably 1 to 100, more preferably 1 to 50, and even more preferably 1 to 30), and
various phosphoric acid compounds and phosphates represented by the following formulas:

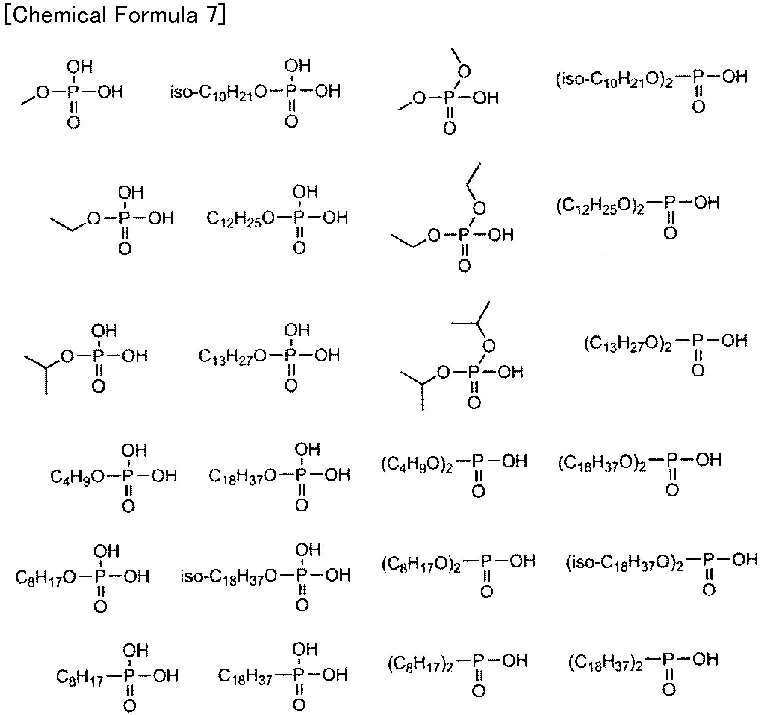

In the present invention, two or more of organophosphorus compounds or salts thereof having different structures, such as phosphate monoesters and phosphate diesters, may be used alone or in combination.

As the above-described organophosphorus compound, commercially available phosphates can be used as appropriate, which include, for example, Newcol 1000-FCP (manufactured by Nippon Nyukazai Co., Ltd.), Antox EHD-400 (manufactured by Nippon Nyukazai Co., Ltd.), Phoslex series (manufactured by SC Organic Chemical Co., Ltd.), LIGHT ACRYLATE P-1A (manufactured by Kyoeisha Chemical Co., Ltd.), LIGHT ACRYLATE P-1M (manufactured by Kyoeisha Chemical Co., Ltd.), TEGO (registered trademark) Dispers 651, 655, and 656 (manufactured by Evonik), DISPERBYK-110, DISPERBYK-111, (manufactured by BYK Japan KK), KAYAMER PM-2, KAYAMER PM-21 (manufactured by Nippon Kayaku Co., Ltd.), and the like.

The amount of the organophosphorus compound is about 0.5 to 10 parts by mass, relative to 100 parts by mass of the zirconium oxide nanoparticle-containing composition of the present invention.

### <Organosulfur Compound>

As the organosulfur compound, compounds represented by the following formula (2) are preferably used: 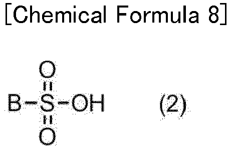 wherein B represents a substituent represented by the following formula (b1) or a substituent containing the substituent represented by the following formula (b1) and at least one of linking groups represented by the following formulas (b2), and when B has a linking group represented by the following formula (b2), the following formula (b2) is bonded to a sulfur atom on the oxygen atom side,
[Chemical Formula 9]

R⁵-(O)ₜ- (b1)

wherein R⁵ represents a saturated or unsaturated hydrocarbon group having 1 to 50 carbon atoms, a (meth)acryloyl group or an aromatic group-containing hydrocarbon group having 6 to 100 carbon atoms, and t is 0 or 1, 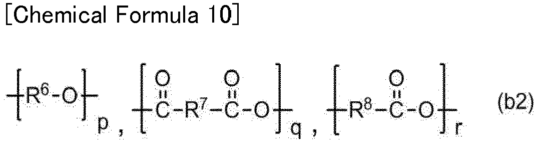 wherein R⁶, R⁷ and R⁸ are each a divalent hydrocarbon group having 1 to 18 carbon atoms or a divalent aromatic group-containing hydrocarbon group having 6 to 30 carbon atoms, and the hydrogen atoms of R⁶, R⁷ and R⁸ may be substituted with an ether group, and p, q and r each represent an integer molar ratio per mole of the (b1) unit, with p + q + r being equal to 1 to 200, p being equal to 1 to 200, q being equal to 1 to 200, and r being equal to 1 to 200.

Examples of the saturated or unsaturated hydrocarbon group having 1 to 50 carbon atoms as R⁵ in the formula (b1) include linear or branched alkyl groups, such as a methyl group, an ethyl group, a propyl group (n-propyl group, isopropyl group, and the like), a butyl group (n-butyl group, tert-butyl group, sec-butyl group, and the like), a pentyl group (n-pentyl group, isopentyl group, neopentyl group, and the like), a hexyl group (n-hexyl group, 2-methylpentyl group, 3-methylpentyl group, 2,2-dimethylbutyl group, 2,3-dimethylbutyl group, and the like), a heptyl group (n-heptyl group, 2-methylhexyl group, 3-methylhexyl group, 2,2-dimethylpentyl group, 2,3-dimethylpentyl group, 2,4-dimethylpentyl group, 3-ethylpentyl group, 2,2,3-trimethylbutyl group, and the like), an octyl group (n-octyl group, methylheptyl group, dimethylhexyl group, 2-ethylhexyl group, 3-ethylhexyl group, trimethylpentyl group, 3-ethyl-2-methylpentyl group, 2-ethyl-3-methylpentyl group, 2,2,3,3-tetramethylbutyl group, and the like), a nonyl group (n-nonyl group, methyloctyl group, dimethylheptyl group, 3-ethylheptyl group, 4-ethylheptyl group, trimethylhexyl group, 3,3-diethylpentyl group, and the like), a decyl group, an isodecyl group, an undecyl group, a dodecyl group, a tridecyl group, a stearyl group, and an isostearyl group; linear or branched alkenyl groups, such as a vinyl group, a propenyl group (allyl group, 1-methylvinyl group, and the like), a butenyl group (1-butenyl group, 2-butenyl group, 3-butenyl group, 1-methylallyl group, 2-methylallyl group, and the like), a pentenyl group (1,1-dimethylallyl group, and the like), a nonenyl group, a decenyl group, an octadecenyl group, a palmitoleyl group, an oleyl group, a linoyl group, and a linoleyl group. The carbon number of the hydrocarbon group is more preferably 1 to 25, even more preferably 1 to 18, and particularly preferably 1 to 12. Among the above examples, preferred is a linear or branched alkyl group having 1 to 10 carbon atoms or a linear or branched alkenyl group having 2 to 4 carbon atoms, more preferred is a methyl group, an ethyl group, a propyl group (n-propyl group, isopropyl group, and the like), a butyl group (n-butyl group, tert-butyl group, sec-butyl group, and the like), an octyl group (n-octyl group, methylheptyl group, dimethylhexyl group, 2-ethylhexyl group, 3-ethylhexyl group, and the like), a decyl group, a vinyl group, a propenyl group (allyl group, 1-methylvinyl group, and the like) or a butenyl group (1-methylallyl group, 2-methylallyl group, and the like), and most preferred is a methyl group, an ethyl group, an octyl group, a decyl group or a 1-methylvinyl group.

In addition, the hydrogen atoms of the saturated or unsaturated hydrocarbon group having 1 to 50 carbon atoms may be substituted with the aromatic group-containing hydrocarbon group having 6 to 100 carbon atoms described later. The aromatic group-containing hydrocarbon group having 6 to 100 carbon atoms used as the substituent of the saturated or unsaturated hydrocarbon group is, for example, preferably a phenyl group or a naphthyl group, and more preferably a phenyl group. Examples of the saturated or unsaturated hydrocarbon group having 1 to 50 carbon atoms that is substituted with the aromatic group-containing hydrocarbon group having 6 to 100 carbon atoms include the following substituents (* indicates a bonding site with an adjacent oxygen atom).

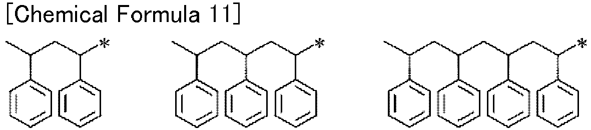

The (meth)acryloyl group specified for R⁵ is a general term for a methacryloyl group represented by CH₂=C(CH₃)-CO-* and an acryloyl group represented by CH₂=CH-CO-*.

The aromatic group-containing hydrocarbon group having 6 to 100 carbon atoms in R⁵ preferably has one to five rings (more preferably one to three rings), and in the case of two or more rings, they may be ring-condensed. In the case of two or more rings, at least one ring is an aromatic ring. Also in the case of two or more aromatic rings, they may be ring-condensed or directly bonded via a sigma bond.

Specific examples of such an aromatic group-containing hydrocarbon group include a phenyl group, a naphthyl group, a pentalenyl group, an indenyl group, an anthracenyl group, a phenanthryl group, a fluorenyl group, and a biphenylyl group. The aromatic group-containing hydrocarbon group is preferably a phenyl group or a naphthyl group, and is more preferably a phenyl group. In addition, the hydrogen atoms of the aromatic group-containing hydrocarbon group (such as an aryl group) may be substituted with a substituent such as an alkyl group having 1 to 50 carbon atoms, an alkenyl group having 1 to 50 carbon atoms, or an aralkyl group having 7 to 50 carbon atoms.

The alkyl group having 1 to 50 carbon atoms used as the substituent of the aromatic group-containing hydrocarbon group is, for example, preferably a linear or branched alkyl group, more preferably an alkyl group having 1 to 25 carbon atoms, even more preferably an alkyl group having 5 to 15 carbon atoms, and particularly preferably a nonyl group, a decyl group, an isodecyl group, an undecyl group, or a dodecyl group.

The alkenyl group having 1 to 50 carbon atoms used as the substituent of the aromatic group-containing hydrocarbon group is, for example, preferably a linear or branched alkenyl group, more preferably a linear or branched alkenyl group having 2 to 4 carbon atoms, and even more preferably a vinyl group, a propenyl group (allyl group, 1-methylvinyl group, and the like), a butenyl group (1-butenyl group, 2-butenyl group, 3-butenyl group, 1-methylallyl group, 2-methylallyl group, and the like).

Examples of the aralkyl group having 7 to 50 carbon atoms used as the substituent of the aromatic group-containing hydrocarbon group include a benzyl group, a phenethyl group (for example, 1-phenethyl group, 2-phenethyl group), a phenylpropyl group, a phenylbutyl group, and a phenylpentyl group. Among them, more preferred is a benzyl group or a phenethyl group, further preferred is a phenethyl group, and particularly preferred is a 2-phenethyl group.

Examples of the aromatic hydrocarbon group to which the alkyl group having 1 to 50 carbon atoms, the alkenyl group having 1 to 50 carbon atoms or the aralkyl group having 7 to 50 carbon atoms is bonded include the followings.

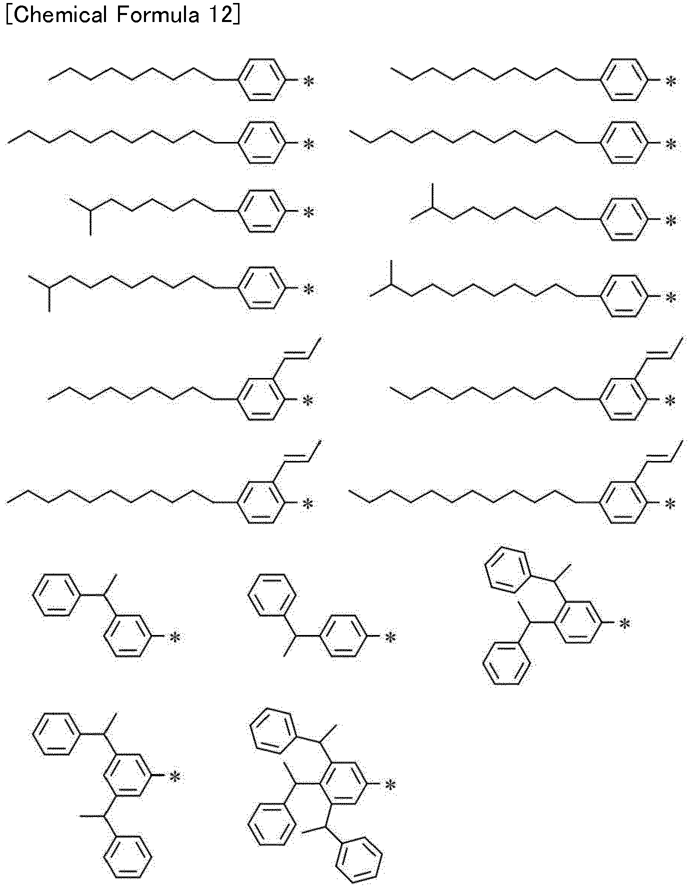

In particular, R⁵ is preferably a linear or branched alkyl group having 1 to 50 carbon atoms, a linear or branched alkenyl group having 2 to 50 carbon atoms, a (meth)acryloyl group or an aromatic group-containing hydrocarbon group having 6 to 20 carbon atoms, more preferably a linear or branched alkyl group having 1 to 30 carbon atoms, a linear or branched alkenyl group having 2 to 30 carbon atoms or an aromatic group-containing hydrocarbon group having 6 to 20 carbon atoms, and even more preferably a linear or branched alkyl group having 1 to 25 carbon atoms, a linear or branched alkenyl group having 2 to 25 carbon atoms or an aromatic group-containing hydrocarbon group having 6 to 10 carbon atoms. Particularly preferable R⁵ is a vinyl group, a propenyl group (allyl group, 1-methylvinyl group, and the like), a butenyl group (1-methylallyl group, 2-methylallyl group, and the like), or an optionally substituted phenyl group, and more preferable R⁵ is a vinyl group, a propenyl group, a butenyl group, or any of the substituents exemplified by the following formulas:

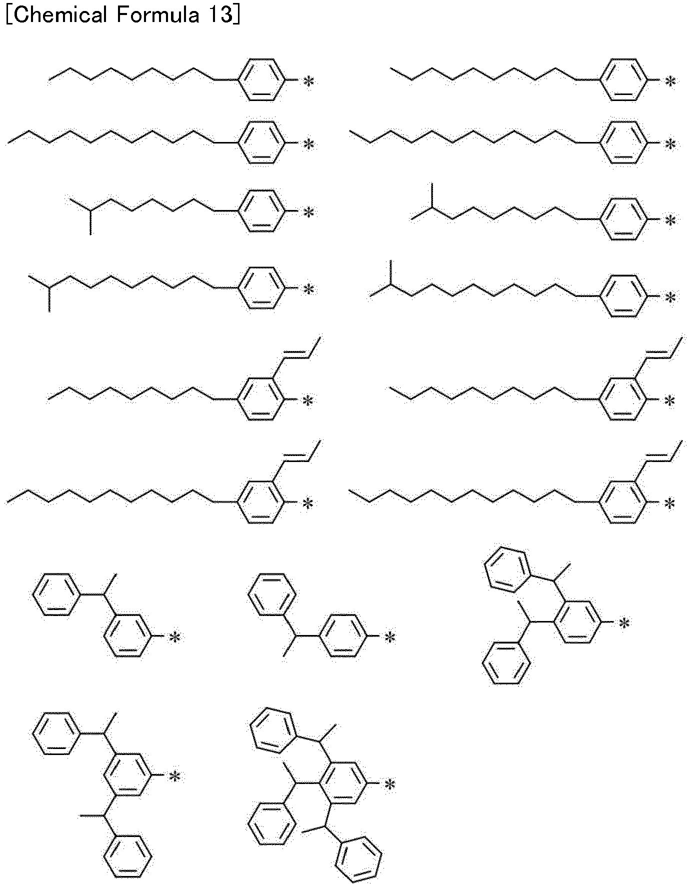

p, q and r each represent an integer molar ratio per mole of the (b1) unit, and p + q + r is preferably 1 to 100, with p being equal to 1 to 50, q being equal to 1 to 50, and r being equal to 1 to 50. t is preferably 0.

In relation to dispersibility and availability, it is particularly preferable that the substituent B contain either or both of linker groups represented by the following formulas (a6): 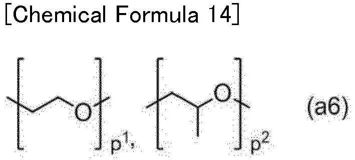 wherein p¹ and p² are each an integer molar ratio per mole of the (b1) unit. p¹ and p² are each preferably 1 to 200, more preferably 1 to 100, even more preferably 1 to 50, and most preferably 1 to 30. Also, p¹ + p² is preferably 1 to 200, more preferably 1 to 100, even more preferably 1 to 50, and most preferably 1 to 30.

Examples of such organosulfur compounds include benzenesulfonic acid, dodecylbenzenesulfonic acid, methylsulfonic acid, ethylsulfonic acid, and various organosulfur compounds represented by the following formulas. 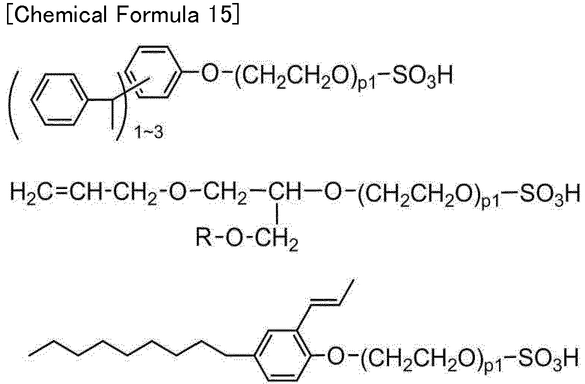 wherein p¹ is the same as above, and R is any substituent.

The crystal structure of the zirconium oxide nanoparticle of the present invention is a cubic, tetragonal, or monoclinic crystal, and the total of tetragonal and cubic crystals is preferably 80% or more of the entire crystal structure. The total proportion of tetragonal and cubic crystals is preferably 85% or more, and more preferably 90% or more. The crystal structure may be a tetragonal crystal alone or a cubic crystal alone. In particular, when the zirconium oxide nanoparticles of the present invention contain Al, rare earth elements or In, tetragonal and/or cubic crystals are stable, and the proportion of tetragonal and/or cubic crystals of a ceramic material obtained by firing the zirconium oxide nanoparticles is also high. The proportion of tetragonal and/or cubic crystals of the ceramic material obtained by firing the zirconium oxide nanoparticles of the present invention is, for example, 25% or more, preferably 50% or more, and more preferably 90% or more, in the total of tetragonal and cubic crystals. After the zirconium oxide nanoparticles are fired, a decrease of tetragonal and/or cubic crystals is suppressed. The amount of change in the total proportion of tetragonal and cubic crystals between before and after the zirconium oxide nanoparticles are fired is preferably 70% or less, more preferably 30% or less, even more preferably 10% or less, and most preferably 5% or less, with respect to the total proportion of tetragonal and cubic crystals before the zirconium oxide nanoparticles are fired.

The shape of the zirconium oxide nanoparticles may be spherical, granular, oval spherical, cubic, rectangular parallellepiped, pyramidal, needle-like, columnar, rod-like, tubular, scale-like, plate-like, flake-like, or the like. When the dispersibility in a solvent or the like and the physical strength after being sintered are considered, the shape is preferably spherical, granular, columnar or the like.

The crystallite diameter of the zirconium oxide nanoparticles calculated by X-ray diffraction analysis is preferably 30 nm or less, and more preferably 20 nm or less. This crystallite diameter can improve the transparency of the composition containing zirconium oxide nanoparticles. In addition, reduction of the firing temperature of the particles and improvement in transparency of a fired body can also be expected. The crystallite diameter is more preferably 20 nm or less, even more preferably 15 nm or less, and particularly preferably 10 nm or less. The lower limit of the crystallite diameter is usually about 1 nm.

The particle size of the zirconium oxide nanoparticles can be evaluated by an average particle size obtained by processing images with various electron microscopes, and the average particle size (average primary particle size) is preferably 50 nm or less. This particle size can improve the transparency of the composition containing zirconium oxide nanoparticles. The average primary particle size is more preferably 30 nm or less, and even more preferably 20 nm or less. The lower limit of the average primary particle size is usually about 1 nm (especially about 5 nm).

The average particle size can be determined by magnification observation of the zirconium oxide nanoparticles with a transmission electron microscope (TEM), a field-emission transmission electron microscope (FE-TEM), a field-emission scanning electron microscope (FE-SEM), or the like; selecting 100 particles at random; measuring their lengths in the long axis direction; and obtaining the arithmetic mean of the lengths in the long axis direction.

Next, a process for producing the zirconium oxide nanoparticles of the present invention will be described. The zirconium oxide nanoparticles of the present invention that are coated with a first carboxylic acid and contain a metallic elements M component can be obtained by a hydrothermal reaction of a zirconium component, the metallic element M component and the first carboxylic acid. The zirconium component may be a zirconium source material comprising a first carboxylic acid, and either zirconium or a zirconium-containing compound (the first carboxylic acid and either zirconium or a zirconium-containing compound are preferably combined), and such a zirconium source material can also be said as a first carboxylic acid component. The metallic elements M component may be a source material of metallic elements M comprising a first carboxylic acid and at least one of metallic elements M and a metallic element M-containing compound (the first carboxylic acid and at least one of metallic elements M and a metallic element M-containing compound are preferably combined), and such a source material of the second metal can also be said as a first carboxylic acid component. In this case, the first carboxylic acid contained in the zirconium component and the second metal component may be the same or different, and plural kinds of the first carboxylic acid can be also used. Zirconium oxide nanoparticles can be obtained by hydrothermal synthesis in the present invention, even without using MgSO₄ as described in Non-Patent Document 1, because a specific first carboxylic acid is used.

Specific examples of the zirconium source material include at least one selected from (i) a salt of a first carboxylic acid and a zirconium oxide precursor, (ii) a zirconium salt of a first carboxylic acid, and (iii) a first carboxylic acid and a zirconium oxide precursor.

Examples of the zirconium oxide precursor include hydroxides, chlorides, oxychlorides, acetates, oxyacetates, oxynitrates, sulfates, carbonates, and alkoxides of zirconium. That is, examples of the zirconium oxide precursor include zirconium hydroxide, zirconium chloride, zirconium oxychloride, zirconium acetate, zirconium oxyacetate, zirconium oxynitrate, zirconium sulfate, zirconium carbonate, and zirconium alkoxide such as tetrabutoxy zirconium.

Hereinafter, the case of the above (i) which is preferable when a water-soluble and highly corrosive zirconium oxide precursor is used as a source material, such as a chloride of an oxychloride of zirconium or a nitrate of an oxynitrate of zirconium, will be described in detail. The salt may be not only a single compound that comprises the carboxylic acid and the zirconium oxide precursor at a stoichiometric ratio, but also a composite salt or a composition in which unreacted carboxylic acid or zirconium oxide precursor is present.

In the above (i), the salt of the first carboxylic acid and the zirconium oxide precursor is preferably a salt of a first carboxylic acid and zirconium obtained by reacting a carboxylate-containing composition derived from the first carboxylic acid with the zirconium oxide precursor, the carboxylate-containing composition being neutralized with an alkali metal and/or alkaline earth metal to a degree of neutralization in the range of 0.1 to 0.8.

The degree of neutralization is preferably 0.1 to 0.8, and more preferably 0.2 to 0.7. If the degree of neutralization is less than 0.1, the salt may not be sufficiently formed due to the low solubility of the first carboxylic acid compound. If the degree of neutralization is more than 0.8, a large amount of white precipitates assumed to be a hydroxide of zirconium may be generated, reducing the yield of coated zirconium oxide particles. The alkali metal and the alkaline earth metal used to obtain the carboxylate-containing composition may be of any type. Preferred is a metal that forms a highly water-soluble carboxylate, and alkali metals, particularly sodium and potassium are suitable.

In the proportion of the carboxylate-containing composition and the zirconium oxide precursor, the carboxyl group is preferably 1 to 20 mol, more preferably 1.2 to 18 mol, and even more preferably 1.5 to 15 mol relative to one mole of the zirconium oxide precursor.

In order to react the carboxylate-containing composition with the zirconium oxide precursor, it is preferable to mix aqueous solutions with each other or an aqueous solution with an organic solvent. The reaction temperature is not particularly limited as long as the aqueous solution can be maintained, and is preferably room temperature to 100° C, and more preferably 40° C to 80° C.

The salt obtained by reacting the carboxylate-containing composition with the zirconium oxide precursor may be hydrothermally reacted as it is; however, insoluble by-products are preferably removed by filtration, liquid separation or the like in advance.

Next, the case of (ii) will be described in detail.

In the embodiment of (ii), the zirconium salt of first carboxylic acid previously prepared is used. This embodiment has an advantage that the salt can be hydrothermally reacted without undergoing complicated steps as described above. However, since easily available compounds are limited, zirconium oxide particles coated with an intended organic group may not be obtained.

Examples of the zirconium salt that can be used in the embodiment of (ii) include zirconium octanoate, zirconium 2-ethylhexanoate, zirconium stearate, zirconium laurate, zirconium naphthenate, zirconium oleate, zirconium ricinoleate, or the like. While the zirconium salt with a low purity may be used after being purified, a commercially available or previously prepared salt can be hydrothermally reacted as it is.

The zirconium oxide precursor that can be used in the above (iii) is the same as the above-described zirconium oxide precursor. In the case of (iii), the zirconium oxide precursor is preferably zirconium carbonate. The proportion of the carboxylic acid is preferably 0.5 mol to 10 mol, more preferably 1 mol to 8 mol, and even more preferably 1.2 mol to 5 mol relative to one mole of the zirconium oxide precursor. The carboxylic acid and the zirconium oxide precursor may be hydrothermally reacted directly, or may be previously reacted before a hydrothermal reaction. In order to react the carboxylic acid with the zirconium oxide precursor before the hydrothermal reaction, it is preferable to react the carboxylic acid with the zirconium oxide precursor in the form of slurry in an organic solvent. In this case, it is preferable to react the carboxylic acid with the zirconium oxide precursor while removing water generated during the reaction from the viewpoint of improving the reaction rate and the yield. In order to extract water during the reaction, the solvent used in the reaction preferably has a boiling point higher than that of water, and a solvent used for the hydrothermal reaction described later is more preferable. The reaction temperature is preferably 70° C or higher, and more preferably 80° C or higher such that water can be extracted. The upper limit of the reaction temperature is 180° C or lower, and more preferably 150° C or lower. When the temperature is too high, the side reaction may progress and the carboxylic acid may be decomposed. In cases where water is not successfully removed during the reaction, lowering the boiling point of water by lowering the reaction pressure is an option to proceed the reaction.

Specific examples of the source material of metallic elements M include at least one selected from (i) a salt of a first carboxylic acid and a precursor of metallic elements M, (ii) a salt of metallic elements M of a first carboxylic acid, and (iii) a first carboxylic acid and a precursor of metallic elements M. Preferred embodiments of (i) to (iii) are the same as the preferred embodiments of (i) to (iii) in the zirconium source material.

More specifically, when the zirconium oxide nanoparticles of the present invention contain, among the metallic elements M, (a) at least one selected from the group consisting of rare earth elements and Al (metallic elements Mₐ) described above, specific examples of the source material of Al or rare earth elements include at least one selected from (i) a salt of a first carboxylic acid and a precursor of oxidized rare earth elements or the like, (ii) a salt of rare earth elements or the like of a first carboxylic acid, and (iii) a first carboxylic acid and a precursor of oxidized rare earth elements or the like.

When the zirconium oxide nanoparticles of the present invention contain, among the metallic elements M, (b) at least one selected from the group consisting of La, Ce, Fe, Co, Sn, Zn, In, Bi, Mn, Ni and Cu (metallic elements M_{b}) described above, specific examples of the source material of metallic elements M_{b} include at least one selected from (i) a salt of a first carboxylic acid and an oxide precursor of metallic elements M_{b}, (ii) a salt of metallic elements M_{b} of a first carboxylic acid, and (iii) a first carboxylic acid and precursor of metallic elements M_{b} oxide.

When the zirconium oxide nanoparticles of the present invention contain, among the metallic elements M, Y and at least one transition metal selected from the group consisting of Fe, Co, Mn, Ni and Cu described above, specific examples of the source material of yttrium include at least one selected from (i) a salt of a first carboxylic acid and a precursor of yttrium oxide, (ii) an yttrium salt of a first carboxylic acid, and (iii) a first carboxylic acid and a precursor of yttrium oxide.

Specific examples of the source material of transition metal include at least one selected from (i) a salt of a first carboxylic acid and a precursor of transition metal oxide, (ii) a transition metal salt of a first carboxylic acid, and (iii) a first carboxylic acid and a precursor of transition metal oxide.

At least one of the above (i) to (iii) for the zirconium component and at least one of the above (i) to (iii) for the metallic elements M component are preferably mixed in the presence of water. In this case, the mixing is suitably carried out with heating or under reduced pressure, because compounds with low boiling points that are contained in the precursor of zirconium oxide, such as ammonia and acetic acid, can be removed out of the system, and a rise in the pressure during the following hydrothermal reaction is suppressed. The reaction may be carried out in a solution to which the organic solvent described later is added.

Next, the hydrothermal reaction will be described.

A zirconium oxide nanoparticle composition is obtained by hydrothermally reacting at least one of the above (i) to (iii) for the zirconium component and at least one of the above (i) to (iii) for the metallic elements M component. When the use of the above (i) to (iii) alone causes high viscosity and the hydrothermal reaction does not efficiently proceed, an organic solvent in which the (i) to (iii) is freely soluble may be added. In order to obtain the zirconium oxide nanoparticles of the present invention, it is preferable to use a zirconium salt of a first carboxylic acid and a salt of metallic elements M of a first carboxylic acid as the zirconium component and the metallic elements M component, respectively, that is, to use the embodiment (ii) for both the zirconium component and the metallic elements M component. However, when the zirconium component and the metallic elements M component contain at least one component that makes it difficult to carry out the embodiment (ii), the zirconium component and the metallic elements M component may contain a component used in the embodiment (i) or (iii). In such a case, the embodiment of the source material used as the zirconium component and the metallic elements M component is preferably any of only (ii) and (i), only (ii) and (iii), only (i), or only (iii). When both the zirconium component and the metallic elements M component are used in the embodiment (iii), source materials containing both zirconium and the metallic elements M may be previously synthesized by mixing the precursor of zirconium oxide, the precursor of the metallic elements M oxide, and the first carboxylic acid before the hydrothermal reaction. This can reduce the number of synthesis steps.

As the organic solvent, hydrocarbon, ketone, ether, alcohol or the like can be used. An organic solvent having a boiling point of 120° C or more under normal pressure is preferable, more preferably 140° C or more, and even more preferably 150° C or more, since the reaction may not proceed sufficiently with a solvent vaporizing during the hydrothermal reaction. Specific examples of the organic solvent include decane, dodecane, tetradecane, mesitylene, pseudocumene, mineral oil, octanol, decanol, cyclohexanol, terpineol, ethylene glycol, diethylene glycol, 1,2-propanediol, 1,3-propanediol, 1,4-butanediol, 2,3-butanediol, hexanediol, glycerin, methane trimethylol, toluene, xylene, trimethylbenzene, dimethylformamide (DMF), and dimethylsulfoxide (DMSO), or the like, Dodecane, tetradecane or trimethylbenzene is preferred.

When the addition of the organic solvent causes separation of the composition into two layers, a surfactant or the like may be added to bring about a homogeneous phase state or a suspension/emulsion state; however, the composition in a two-layer state can usually be hydrothermally reacted directly. The composition may contain a sufficient amount of water derived from the raw material. However, when there is no or little water contained in the raw material, it is necessary to add water before the composition being hydrothermally reacted.

The amount of water present in the system of the hydrothermal reaction is preferably 1/1 or more, more preferably 4/1 or more, even more preferably 8/1 or more, preferably 100/1 or less, more preferably 50/1 or less, and even more preferably 30/1 or less, in terms of the number of moles of water relative to the number of moles of the zirconium oxide precursor or a salt containing zirconium present in the system (hereinafter, referred to as zirconium oxide precursor or the like) (the number of moles of water/the number of moles of the zirconium oxide precursor or the like). If the amount of water is less than 1/1, the hydrothermal reaction may require a long time or the particle size of the resulting zirconium oxide particles may increase. On the other hand, if the amount of water exceeds 100/1, there is no particular problem except that the productivity decreases since the number of zirconium oxide precursor or the like in the system is small.

A preferable range of the number of moles of water/the number of moles of the zirconium oxide precursor or the like is as follows.
(a) When the zirconium oxide nanoparticles contain, among the metallic elements M, at least one selected from the group consisting of rare earth elements and Al, the above range is preferably 4/1 to 100/1, and more preferably 8/1 to 50/1.
(b) When the zirconium oxide nanoparticles contain, among the metallic elements M, at least one selected from the group consisting of La, Ce, Fe, Co, Sn, Zn, In, Bi, Mn, Ni and Cu, the above range is preferably 1/1 to 50/1, and more preferably from 4/1 to 30/1.
(c) When the zirconium oxide nanoparticles contain, among the metallic elements M, Y and at least one transition metal selected from the group consisting of Fe, Co, Mn, Ni and Cu, the above range is preferably 1/1 to 50/1, and more preferably from 4/1 to 30/1.

The hydrothermal reaction is preferably carried out at a pressure of 2 MPaG (gauge pressure) or less. While the reaction proceeds even at a pressure of 2 MPaG or more, it is not industrially preferable because a more expensive reaction apparatus is required. On the other hand, too low pressures possibly make the progress of the reaction delay; the particle size of the nanoparticles increase due to prolonged reaction; or the zirconium oxide have a plurality of crystal systems. Therefore, the reaction is preferably carried out at a pressure of 0.1 MPaG or more, and more preferably 0.2 MPaG or more. The temperature during the hydrothermal reaction is, for example, 150 to 250° C, and the temperature range may be maintained, for example, for about 2 to 24 hours.

When the zirconium oxide nanoparticles of the present invention are coated with a first carboxylic acid, and further with an organic acid other than the first carboxylic acid, zirconium oxide nanoparticles coated with the first carboxylic acid are prepared first, and then the first carboxylic acid compound is substituted with the organic acid. Specifically, this substitution is carried out by stirring a mixture (in particular, a mixed solution) containing the zirconium oxide nanoparticles coated with the first carboxylic acid and the organic acid. The mass ratio of the organic acid to the zirconium oxide nanoparticles coated with the first carboxylic acid is preferably 5/100 to 200/100.

Since the zirconium oxide nanoparticles of the present invention have good dispersibility in various media, the zirconium oxide nanoparticles can be added to various solvents, monomers (monofunctional monomers and/or crosslinkable monomers), oligomers, polymers and the like, or combinations thereof. The present invention also includes a composition containing zirconium oxide nanoparticles. The composition includes a dispersion containing zirconium oxide nanoparticles and a resin composition containing zirconium oxide nanoparticles.

Examples of typical solvents include alcohols such as methanol, ethanol, n-propanol, isopropanol and ethylene glycol; ketones such as methyl ethyl ketone, methyl isobutyl ketone and cyclohexanone; esters such as ethyl acetate, propyl acetate and propylene glycol monomethyl ether acetate; ethers such as ethylene glycol monomethyl ether and diethylene glycol monobutyl ether; modified ethers such as propylene glycol monomethyl ether acetate (preferably ether-modified and/or ester-modified ethers, and further preferably ether-modified and/or ester-modified alkylene glycols); hydrocarbons such as benzene, toluene, xylene, ethylbenzene, trimethylbenzene, hexane, cyclohexane, methylcyclohexane, ethylcyclohexane and mineral spirit; halogenated hydrocarbons such as dichloromethane and chloroform; amides such as dimethylformamide, N,N-dimethylacetamide and N-methylpyrrolidone; water; and oils such as mineral oil, vegetable oil, wax oil and silicone oil. One of these solvents can be selected and used, or two or more thereof can be selected and used in combination. From the viewpoint of handleability, a solvent having a boiling point of about 40° C or more at normal pressure and about 250° C or less is preferable, and ketones, modified ethers and the like are suitable for the resist application described later.

The monofunctional monomer may be a compound having only one polymerizable carbon-carbon double bond, and examples thereof include (meth)acrylates; styrenic monomers such as styrene, p-tert-butylstyrene, α-methylstyrene, m-methylstyrene, p-methylstyrene, p-chlorostyrene, and p-chloromethylstyrene; carboxyl group-containing monomers such as (meth)acrylic acids; and hydroxy group-containing monomers such as hydroxyethyl (meth)acrylates. Specific examples of the (meth)acrylates include alkyl (meth)acrylates such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate and lauryl (meth)acrylate; cycloalkyl (meth)acrylates such as cyclohexyl (meth)acrylate and isobornyl (meth)acrylate; aralkyl (meth)acrylates such as benzyl (meth)acrylate; and (meth)acrylates having a glycidyl group such as glycidyl (meth)acrylate. Methyl (meth)acrylateis particularly preferable. These exemplified monofunctional monomers may be used alone, or two or more thereof may be mixed as appropriate and used.

The crosslinkable monomer may be a compound including a plurality of carbon-carbon double bonds copolymerizable with the carbon-carbon double bond of the monomer. Specific examples of the crosslinkable monomer include multifunctional (meth)acrylates, such as alkylene glycol poly(meth)acrylates such as ethylene glycol di(meth)acrylate, diethylene glycol di(meth)acrylate, propylene glycol di(meth)acrylate, and dipropylene glycol di(meth)acrylate; neopentyl glycol poly(meth)acrylates such as neopentyl glycol di(meth)acrylate and dineopentyl glycol di(meth)acrylate; trimethylolpropane poly(meth)acrylates such as trimethylolpropane tri(meth)acrylate and ditrimethylolpropane tetra(meth)acrylate; and pentaerythritol poly(meth)acrylates such as pentaerythritol tetra(meth)acrylate and dipentaerythritol hexa(meth)acrylate; multifunctional styrenic monomers such as divinylbenzene; and multifunctional allyl ester monomers such as diallyl phthalate, diallyl isophthalate, triallyl cyanurate, and triallyl isocyanurate.

The composition containing the above monomer corresponds to a curable composition. After being cured, the curable composition constitutes a resin composition, and such a curable composition is also included in the resin composition of the present invention. In addition, the composition of the present invention may be a resin composition containing the above polymer (resin). When the polymer constitutes the resin composition of the present invention, examples of the polymer as a medium include polyamides such as 6-nylon, 66-nylon and 12-nylon; polyimides; polyurethanes; polyolefins such as polyethylene and polypropylene; polyesters such as PET, PBT and PEN; polyvinyl chlorides; polyvinylidene chlorides; polyvinyl acetates; polystyrenes; (meth)acrylic resin polymers; ABS resins; fluororesins; phenolic resins such as phenol-formalin resins and cresol-formalin resins; epoxy resins; and amino resins such as urea resins, melamine resins and guanamine resins. Examples thereof also include soft and hard resins such as polyvinyl butyral resins, polyurethane resins, ethylene-vinyl acetate copolymer resins, and ethylene-(meth)acrylate copolymer resins. Among the above polymers, polyimides, polyurethanes, polyesters, (meth)acrylic resin polymers, phenolic resins, amino resins, and epoxy resins are more preferable. These polymers may be used alone, or two or more thereof may be mixed and used.

The concentration of the zirconium oxide nanoparticles of the present invention in the composition can be appropriately set depending on the application, but when the composition is uncured or contains a polymer (resin), the concentration of the zirconium oxide nanoparticles is usually 90% by mass or less relative to 100% by mass of all components (total of all of the substituted coated particles, solvent, monomer, oligomer, polymer and polymer precursor described later used). If the concentration of the zirconium oxide nanoparticles exceeds 90% by mass, the zirconium oxide nanoparticles are hard to be uniformly dispersed, and the uncured composition may become cloudy. On the other hand, the lower limit value of the concentration is not particularly limited, but in consideration of the solvent cost, for example, the concentration is 1% by mass or more. The concentration is more preferably 5% by mass or more and 85% by mass or less, and even more preferably 10% by mass or more and 80% by mass or less.

The resin composition of the present invention also includes not only the composition of the polymer (polymer compound) and the zirconium oxide nanoparticles of the present invention, but also a monomer constituting the polymer (polymer precursor) and the zirconium oxide nanoparticles of the present invention, the monomer being , for example, a mixture of dicarboxylic acid and diamine, and an unsaturated carboxylic acid such as acrylic acid or methacrylic acid or an ester compound thereof. Also, the resin composition of the present invention may be one containing both a polymer and a monomer, one containing a polymer and a solvent (coating material), or also may be a molding resin used for a molded material such as an optical film.

Further, the zirconium oxide nanoparticles of the present invention are remarkably excellent in dispersibility. Accordingly, even when the zirconium oxide nanoparticles are included in a composition (dispersion) at a high concentration, the composition has good transparency. The composition in which the zirconium oxide nanoparticles are dispersed at a high concentration is, for example, advantageous for improving refractive index, and it is possible to adjust refractive index according to various applications. When the zirconium oxide nanoparticles are used as a zirconium oxide nanoparticle composition at a high concentration, the amount of the zirconium oxide nanoparticles in the composition is preferably 25% by mass or more, more preferably 30% by mass or more, and even more preferably 60% by mass or more. Although the upper limit of the amount is not particularly limited, the amount of the zirconium oxide nanoparticles in the composition is preferably 90% by mass or less.

The resin composition of the present invention (including the curable composition after being cured) may contain the zirconium oxide nanoparticles and other additive components of the resin. Examples of such additive components include curing agents, curing accelerators, coloring agents, release agents, reactive diluents, plasticizers, stabilizing agents, flame-retardant aids, and crosslinking agents. The nanoparticles of the present invention can be colored by containing an appropriate transition metal, and it is also possible to change the color tone by changing the kind and amount of the transition metal depending on applications.

The shape of the resin composition of the present invention (including the curable composition after being cured) is not particularly limited, and it may be a molded material such as a plate, a sheet, a film, or a fiber.

Since the zirconium oxide nanoparticles of the present invention are coated with a specific first carboxylic acid, they have good dispersibility in organic media, and thus a ceramic material obtained by firing a composition containing the zirconium oxide nanoparticles of the present invention has good ceramic properties such as translucency, toughness and strength, and further, the present invention also includes a ceramic material obtained from the zirconium oxide nanoparticles of the present invention (zirconium oxide nanoparticles coated with the first carboxylic acid and containing the metallic elements M). In the preferred embodiment, the zirconium oxide nanoparticles of the present invention contain at least one of Y, Al, La, Ce and In, and thus have a stable crystal structure. That is, when the zirconium oxide nanoparticles of the present invention in such a preferred embodiment are fired, the change in crystal structure is suppressed, and cracking, strength reduction and the like caused by the change in crystal structure can be suppressed.

The ceramic material obtained from the zirconium oxide nanoparticles of the present invention (specifically, the ceramic material obtained by firing) can be produced by firing the zirconium oxide nanoparticles of the present invention alone. The ceramic material can also be obtained by firing a composition containing the zirconium oxide nanoparticles of the present invention and additives such as alumina, spinel, YAG, mullite, and an aluminum borate compound. Further, the ceramic material can also be obtained by firing a composition containing the zirconium oxide nanoparticles of the present invention and a binder. The firing temperature in this case may be about 500 to 1600° C. The firing can be carried out by a known method. Pressure may be applied to promote sintering during firing. The firing may performed in air, an oxygen atmosphere, a mixed atmosphere of oxygen and air, or in an inert atmosphere such as nitrogen or argon. The above conditions can be appropriately selected according to applications after the firing.

The ceramic material obtained from the zirconium oxide nanoparticles of the present invention usually contains a complex oxide of zirconium and added metal, a mixture of respective single oxides of zirconium and added metal, or both of them.

This application claims the benefit of priority based on Japanese Patent Application No. 2015-194172 filed on September 30, 2015, Japanese Patent Application No. 2016-039322 filed on March 1, 2016, Japanese Patent Application No. 2016-039323 filed on March 1, 2016, and Japanese Patent Application No. 2016-108539 filed on May 31, 2016. The entire contents of the specifications of Japanese Patent Application No. 2015-194172 filed on September 30, 2015, Japanese Patent Application No. 2016-039322 filed on March 1, 2016, Japanese Patent Application No. 2016-039323 filed on March 1, 2016, and Japanese Patent Application No. 2016-108539 filed on May 31, 2016 are incorporated herein by reference.

### EXAMPLES

Hereinafter, the present invention will be described more specifically by way of examples. The present invention is not limited by the following examples, and can be naturally practiced with suitable modifications in the scope in accordance with the spirit described above and below, any of which modifications is included in the technical scope of the present invention.

The physical properties and properties disclosed in examples were measured by the following methods.

### (1) Analysis of Crystal Structure

The crystal structure of zirconium oxide particles were analyzed using an X-ray diffractometer (manufactured by Rigaku Corporation; RINT-TTR III). Measurement conditions were as follows:
X-ray source: CuK α(0.154 nm)
X-ray output setting: 50 kV, 300 mA
Sampling width: 0.0200°
Scanning speed: 10.0000° /min
Measurement range: 5 to 90°
Measurement temperature: 25° C

### (2) Quantitative Determination of Proportions of Tetragonal and/or Cubic, Monoclinic crystals

Quantitative determination was made by a Reference Intensity Ratio (RIP) method with calculation software (manufactured by Rigaku Corporation; PDXL), based on the values calculated using an X-ray diffractometer (manufactured by Rigaku Corporation; RINT-TTR III) (Assignment of peaks was done as specified by the calculation software.). Incidentally, since it is difficult to distinguish between cubic and tetragonal crystals by X-ray diffraction measurement of coated zirconia nanoparticles before firing, the proportion of the cubic crystals is counted as the proportion of the tetragonal crystals even in the cases where cubic crystals exist.

### (3) Calculation of Crystallite Diameter by X-Ray Diffraction Analysis

The crystallite diameter of zirconium oxide particles was calculated using calculation software (manufactured by Rigaku Corporation; PDXL), based on the width at half height of the peak at 30° analyzed and calculated by an X-ray diffractometer (manufactured by Rigaku Corporation; RINT-TTR III).

### (4) Determination of Weight (Mass) Reduction Rate

Coated zirconium oxide particles were heated from room temperature to 800° C at 10° C/min under an air atmosphere with a TG-DTA (thermogravimetry-differential thermal analysis) apparatus, to measure the weight (mass) reduction rate of the particles. From this weight (mass) reduction rate, the proportion of the first carboxylic acid coating the zirconium oxide particles and the proportion of zirconium oxide can be obtained.

### (5) ¹H-NMR Measurement

Coated zirconium oxide particles were dispersed in deuterated chloroform to prepare a measurement sample, which was then measured using "Unity Plus" manufactured by Variann (resonance frequency: 400 MHz, number of accumulations: 16). Molar ratios of respective compounds were determined based on the integration ratios of peaks at the chemical shifts (relative to tetramethylsilane) shown below.
i) 2-Ethylhexanoic acid (1.0 - 0.5 ppm: 6H)
ii) Carboxylate derived from 2-ethylhexanoic acid (1.0 - 0.5 ppm: 6H)
iii) 2-Acryloyloxyethyl succinate (6.7 - 5.7 ppm: 3H, 4.5 - 4.0 ppm: 4H)
iv) 3-Methacryloxypropyltrimethoxysilane (6.5 - 5.5 ppm: 2H, 4.5 - 4.0 ppm: 2H, 4.0 - 3.5 ppm: 9H, 1.0 - 0.5 ppm: 2H)

### (6) Fluorescent X-Ray Analysis

A fluorescent X-ray analysis apparatus (ZSX Primus II, manufactured by Rigaku Corporation) was used to determine the content of zirconium and the content of metallic elements M in the coated zirconium oxide particles.

### (7) Absorbance Measurement

For the absorbance measurement, a diffuse reflection measurement was carried out with an integrating sphere including barium sulfate with use of UV-3100 manufactured by Shimadzu Corporation. The measurement was carried out at measurement wavelengths of 200 to 800 nm in increments of 0.2 nm.

### Example 1-1

### Production of Coated Yttria-Stabilized Zirconium Oxide Nanoparticles 1 (Coated YSZ Particles 1) Coated with 2-Ethylhexanoic Acid and/or Carboxylate Derived from 2-Ethylhexanoic Acid

Yttrium(III) 2-ethylhexanoate (1.3 g, with a content of yttrium of 7.9% by mass, manufactured by Mitsuwa Chemicals Co., Ltd.) and pure water (15.7 g) were mixed into a solution of zirconium 2-ethylhexanoate in mineral spirit (91.6 g, with a content of zirconium 2-ethylhexanoate of 44% by mass, manufactured by Daiichi Kigenso Kagaku Kogyo Co., Ltd.), and the mixture was charged in a 200 mL hydrothermal synthesis vessel. The vessel was heated to 190° C and kept at that temperature for 16 hours to carry out the reaction. The pressure during hydrothermal synthesis was 1.3 MPaG (gauge pressure). The mixed solution after the reaction was taken out, and the precipitate that had deposited at the bottom was filtered off to collect 15 g of a viscous solid. The viscous solid was taken in a beaker, washed with 75 g of methanol, and then filtered with a Hirsch funnel. The resulting solid was dried under reduced pressure at room temperature to remove methanol, thereby to collect 11 g of white yttria-stabilized zirconium oxide nanoparticles 1 (coated YSZ particles 1).

When the crystal structure of the resulting Coated YSZ Particles 1 was examined, diffraction lines attributed to tetragonal and monoclinic crystals were detected. The strengths of the diffraction lines revealed that the ratio of tetragonal crystals to monoclinic crystals was 91/9 and their particle size (crystallite diameter) was 5 nm. Incidentally, since it is difficult to distinguish between cubic and tetragonal crystals by X-ray diffraction measurement, the proportion of the cubic crystals is counted as the proportion of the tetragonal crystals even in the cases where cubic crystals exist.

Further, the mass reduction rate of the coated YSZ particles 1 determined according to the "(4) Determination of Weight (Mass) Reduction Rate" described above was 14% by mass. Accordingly, it turned out that the amount of the 2-ethylhexanoic acid and/or carboxylate derived from the 2-ethylhexanoic acid coating the coated YSZ particles 1 was 14% by mass of the entire coated YSZ particles 1.

Further, the weight ratio of presence of zirconium and yttrium in the coated YSZ particles 1 determined according to the "(6) Fluorescent X-Ray Analysis" described above was 99/1.

### Example 1-2

### Production of Coated Yttria-Stabilized Zirconium Oxide Nanoparticles 2 (Coated YSZ Particles 2) Coated with 2-Ethylhexanoic Acid and/or Carboxylate Derived from 2-Ethylhexanoic Acid

Yttrium(III) 2-ethylhexanoate (4.8 g, with a content of yttrium of 7.9% by mass, manufactured by Mitsuwa Chemicals Co., Ltd.) and pure water (15.0 g) were mixed into a solution of zirconium 2-ethylhexanoate in mineral spirit (86.7 g, with a content of zirconium 2-ethylhexanoate of 44% by mass, manufactured by Daiichi Kigenso Kagaku Kogyo Co., Ltd.), and the mixture was charged in a 200 mL hydrothermal synthesis vessel. The vessel was heated to 190° C and kept at that temperature for 16 hours to carry out the reaction. The pressure during hydrothermal synthesis was 1.3 MPaG (gauge pressure). The mixed solution after the reaction was taken out, and the precipitate that had deposited at the bottom was filtered off to collect 15 g of a viscous solid. The viscous solid was taken in a beaker, washed with 75 g of methanol, and then filtered with a Hirsch funnel. The resulting solid was dried under reduced pressure at room temperature to remove methanol, thereby to collect 11 g of white yttria-stabilized zirconium oxide nanoparticles 2 (coated YSZ particles 2).

When the crystal structure of the resulting coated YSZ particles 2 was examined, diffraction lines attributed to tetragonal and monoclinic crystals were detected. The strengths of the diffraction lines revealed that the ratio of tetragonal crystals to monoclinic crystals was 94/6 and their particle size (crystallite diameter) was 4 nm.

Further, the mass reduction rate of the coated YSZ particles 2 determined according to the "(4) Determination of Weight (Mass) Reduction Rate" described above was 14% by mass. Accordingly, it turned out that the amount of the 2-ethylhexanoic acid and/or carboxylate derived from the 2-ethylhexanoic acid coating the coated YSZ particles 2 was 14% by mass of the entire coated YSZ particles 2.

Further, the weight ratio of presence of zirconium and yttrium in the coated YSZ particles 2 determined according to the "(6) Fluorescent X-Ray Analysis" described above was 95/4.

### Example 1-3

### Production of Coated Yttria-Stabilized Zirconium Oxide Nanoparticles 3 (Coated YSZ Particles 3) Coated with 2-Ethylhexanoic Acid and/or Carboxylate Derived from 2-Ethylhexanoic Acid

Yttrium(III) 2-ethylhexanoate (11.7 g, with a content of yttrium of 7.9% by mass, manufactured by Mitsuwa Chemicals Co., Ltd.) and pure water (13.8 g) were mixed into a solution of zirconium 2-ethylhexanoate in mineral spirit (80.4 g, with a content of zirconium 2-ethylhexanoate of 44% by mass, manufactured by Daiichi Kigenso Kagaku Kogyo Co., Ltd.), and the mixture was charged in a 200 mL hydrothermal synthesis vessel. The vessel was heated to 190° C and kept at that temperature for 16 hours to carry out the reaction. The pressure during hydrothermal synthesis was 1.3 MPaG (gauge pressure). The mixed solution after the reaction was taken out, and the precipitate that had deposited at the bottom was filtered off to collect 13 g of a viscous solid. The viscous solid was taken in a beaker, washed with 65 g of methanol, and then filtered with a Hirsch funnel. The resulting solid was dried under reduced pressure at room temperature to remove methanol, thereby to collect 10 g of white yttria-stabilized zirconium oxide nanoparticles 3 (coated YSZ particles 3).

When the crystal structure of the resulting coated YSZ particles 3 was examined, diffraction lines attributed to tetragonal and monoclinic crystals were detected. The strengths of the diffraction lines revealed that the ratio of tetragonal crystals to monoclinic crystals was 100/0 and their particle size (crystallite diameter) was 4 nm.

Further, the mass reduction rate of the coated YSZ particles 3 determined according to the "(4) Determination of Weight (Mass) Reduction Rate" described above was 15% by mass. Accordingly, it turned out that the amount of the 2-ethylhexanoic acid and/or carboxylate derived from the 2-ethylhexanoic acid coating the coated YSZ particles was 15% by mass of the entire coated YSZ particles 3.

Further, the weight ratio of presence of zirconium and yttrium in the coated YSZ particles 3 determined according to the "(6) Fluorescent X-Ray Analysis" described above was 91/9.

### Example 1-4

### Production of Coated Yttria-Stabilized Zirconium Oxide Nanoparticles 4 (Coated YSZ Particles 4) Coated with 2-Ethylhexanoic Acid and/or Carboxylate Derived from 2-Ethylhexanoic Acid

Yttrium(III) 2-ethylhexanoate (6.3 g, with a content of yttrium of 7.9% by mass, manufactured by Mitsuwa Chemicals Co., Ltd.) and pure water (15.8 g) were mixed into a solution of zirconium 2-ethylhexanoate in mineral spirit (83.0 g, with a content of zirconium 2-ethylhexanoate of 44% by mass, manufactured by Daiichi Kigenso Kagaku Kogyo Co., Ltd.), and the mixture was charged in a 200 mL hydrothermal synthesis vessel. The vessel was heated to 190° C and kept at that temperature for 8 hours to carry out the reaction. The pressure during hydrothermal synthesis was 1.4 MPaG (gauge pressure). The mixed solution after the reaction was taken out, and the precipitate that had deposited at the bottom was filtered off to collect 13 g of a viscous solid. The viscous solid was taken in a beaker, washed with 70 g of methanol, and then filtered with a Hirsch funnel. The resulting solid was dried under reduced pressure at room temperature to remove methanol, thereby to collect 10 g of white yttria-stabilized zirconium oxide nanoparticles 4 (coated YSZ particles 4).

When the crystal structure of the resulting coated YSZ particles 4 was examined, diffraction lines attributed to tetragonal and monoclinic crystals were detected. The strengths of the diffraction lines revealed that the ratio of tetragonal crystals to monoclinic crystals was 97/3 and their particle size (crystallite diameter) was 5 nm.

Further, the mass reduction rate of the coated YSZ particles 4 determined according to the "(4) Determination of Weight (Mass) Reduction Rate" described above was 17% by mass. Accordingly, it turned out that the amount of the 2-ethylhexanoic acid and/or carboxylate derived from the 2-ethylhexanoic acid coating the coated YSZ particles 4 was 17% by mass of the entire coated YSZ particles 4.

Further, the weight ratio of presence of zirconium and yttrium in the coated YSZ particles 4 determined according to the "(6) Fluorescent X-Ray Analysis" described above was 95/5.

### Comparative Example 1-1

### Production of Coated Zirconium Oxide Nanoparticles (Coated ZrO₂ Particles) Coated with 2-Ethylhexanoic Acid and/or Carboxylate Derived from 2-Ethylhexanoic Acid

Pure water (15.5 g) was mixed into a solution of zirconium 2-ethylhexanoate in mineral spirit (90.4 g, with a content of zirconium 2-ethylhexanoate of 44% by mass, manufactured by Daiichi Kigenso Kagaku Kogyo Co., Ltd.), and the mixture was charged in a 200 mL hydrothermal synthesis vessel. The vessel was heated to 190° C and kept at that temperature for 16 hours to carry out the reaction. The pressure during hydrothermal synthesis was 1.3 MPaG (gauge pressure). The mixed solution after the reaction was taken out, and the precipitate that had deposited at the bottom was filtered off to collect 15 g of a wet cake. The viscous solid was taken in a beaker, washed with 75 g of methanol, and then filtered with a Hirsch funnel. The resulting solid was dried under reduced pressure at room temperature to remove methanol, thereby to collect 11 g of white zirconium oxide nanoparticles (coated ZrO₂ particles).

When the crystal structure of the resulting coated ZrO₂ particles was examined , diffraction lines attributed to tetragonal and monoclinic crystals were detected. The strengths of the diffraction lines revealed that the ratio of tetragonal crystals to monoclinic crystals was 74/26 and their particle size (crystallite diameter) was 5 nm.

Further, the mass reduction rate of the coated ZrO₂ particles determined according to the "(4) Determination of Weight (Mass) Reduction Rate" described above was 14% by mass. Accordingly, it turned out that the amount of the 2-ethylhexanoic acid and/or carboxylate derived from the 2-ethylhexanoic acid coating the coated zirconium oxide particles was 14% by mass of the entire coated zirconium oxide particles.

### Example 1-5

### Production of Yttria-Stabilized Zirconium Oxide Nanoparticles 5 (Coated YSZ Particles 5) Coated with 2-Ethylhexanoic Acid and/or Carboxylate Derived from 2-Ethylhexanoic Acid and 2-Acryloyloxyethyl Succinate

The coated YSZ particles 2 (10 g) obtained in Example 1-2 and 2-acryloyloxyethyl succinate (1.5 g) were mixed in propylene glycol monomethyl ether acetate (12 g, hereinafter referred to as "PGMEA") with stirring until a homogeneous dispersion was formed. Subsequently, n-hexane (36 g) was added to agglomerate the dispersed particles, turning the solution cloudy. The agglomerated particles were separated from the cloudy solution by filtration. Thereafter, the separated agglomerated particles were added to n-hexane (36 g), and the mixture was stirred for 10 minutes. Then, the agglomerated particles were separated by filtration, and the resulting particles were vacuum-dried at room temperature to give yttria-stabilized zirconium oxide nanoparticles 5 (coated YSZ particles 5) that had been surface-treated with 2-ethylhexanoic acid/or carboxylate derived from the 2-ethylhexanoic acid and 2-acryloyloxyethyl succinate.

The resulting coated YSZ particles 5 were dispersed in deuterated chloroform to prepare a measurement sample, which was then analyzed with ¹H-NMR. As a result, it turned out that the molar ratio of presence of the 2-ethylhexanoic acid and/or carboxylate derived from 2-ethylhexanoic acid to the 2-acryloyloxyethyl succinate was 29:71.

Further, the mass reduction rate of the coated YSZ particles 5 determined according to the "(4) Determination of Weight (Mass) Reduction Rate" described above was 18% by mass. Accordingly, it turned out that the amount of the 2-ethylhexanoic acid and/or carboxylate derived from the 2-ethylhexanoic acid and 2-acryloyloxyethyl succinate coating the coated zirconium oxide particles was 18% by mass of the entire coated zirconium oxide particles.

### Example 1-6

### Production of Inorganic Oxide Fine Particle-Containing Solution 1

The coated YSZ particles 5 (7 g) obtained in Example 1-5 and methyl ethyl ketone (3 g) were mixed, and the mixture was stirred until being homogeneous to obtain an inorganic oxide fine particle-containing solution 1.

### Example 1-7

### Production of Inorganic Oxide Fine Particle-Containing Solution 2

The coated YSZ particles 5 (7 g) obtained in Example 1-5, methyl ethyl ketone (3 g) and phosphate KAYAMER PM-21 (manufactured by Nippon Kayaku Co., Ltd., 0.1 g) were mixed, and the mixture was stirred until being homogeneous to obtain an inorganic oxide fine particle-containing solution 2.

### Example 1-8

### Production of Yttria-Stabilized Zirconium Oxide Nanoparticles 6 (Coated YSZ Particles 6) Coated with 2-Ethylhexanoic Acid and/or Carboxylate Derived from 2-Ethylhexanoic Acid and 3-Methacryloxypropyltrimethoxysilane

The coated yttria-stabilized zirconium oxide nanoparticles 2 (10 g) obtained in Example 1-2 were dispersed in methyl isobutyl ketone (40 g) to prepare a cloudy slurry. To the solution were added 3-methacryloxypropyltrimethoxysilane (1.0 g, manufactured by Shin-Etsu Chemical Co., Ltd., KBM-503) as a surface-treatment agent and water (0.9 g), and the mixture was heated under reflux at 80° C for 1 hour to give a transparent dispersion solution. Subsequently, n-hexane was added to agglomerate the dispersed particles, turning the solution cloudy. The agglomerated particles were separated from the cloudy liquid by filtration and then dried by heating at room temperature to prepare yttria-stabilized zirconium oxide nanoparticles 6 (coated YSZ particles 6) coated with 2-ethylhexanoic acid and/or carboxylate derived from 2-ethylhexanoic acid and 3-methacryloxypropyltrimethoxysilane.

The resulting coated YSZ particles 5 were heated to 800° C at a rate of 10° C/min under an air atmosphere by TG-DTA (thermogravimetry-differential thermal analysis) to determine the mass reduction rate of the coated YSZ particles 5. As a result, the mass reduction rate was 15% by mass. From this result, it was confirmed that the organic content of the coated YSZ particles 6 was 15% by mass.

The resulting coated YSZ particles 6 were dispersed in deuterated chloroform to prepare a measurement sample, which was then analyzed with ¹H-NMR. As a result, it turned out that the molar ratio of presence of the 2-ethylhexanoic acid and/or carboxylate derived from 2-ethylhexanoic acid to the 3-methacryloxypropyltrimethoxysilane was 59:41.

### Example 1-9

### Production of Inorganic Oxide Fine Particle-Containing Solution 3

The coated YSZ particles 6 (7 g) obtained in Example 1-8 and methyl ethyl ketone (3 g) were mixed, and the mixture was stirred until being homogeneous to obtain an inorganic oxide fine particle-containing solution 3.

### Example 1-10

### Production of Inorganic Oxide Fine Particle-Containing Solution 4

The coated YSZ particles 6 (7 g) obtained in Example 1-8, methyl ethyl ketone (3 g) and phosphate Phoslex A-208 (1 g, manufactured by SC Organic Chemical Co., Ltd.) were mixed, and the mixture was stirred until being homogeneous to obtain an inorganic oxide fine particle-containing solution 4.

### Example 1-11

### Production of Benzyl Acrylate Dispersion of Coated YSZ Particles 6

Benzyl acrylate (7 g, manufactured by Hitachi Chemical Company, Ltd.) was added to the inorganic oxide particle-containing solution 4 (10 g) obtained in Example 1-10, and the mixture was stirred until being homogeneous. While the stirring was continued, methyl ethyl ketone was removed at 50° C under reduced pressure to obtain 14 g of a benzyl acrylate dispersion of the coated YSZ particles 6.

### Example 1-12

### Production of Inorganic Oxide Fine Particle-Containing Composition

To 1 g of the benzyl acrylate dispersion of the coated YSZ particles 6 was added 0.02 g of Irgacure 184, and the mixture was stirred until being homogeneous to obtain an inorganic oxide fine particle-containing composition.

### Example 1-13

### Production of Inorganic Oxide Fine Particle-Containing Transparent Cured Film

The inorganic oxide fine particle-containing composition obtained in Example 1-12 was placed on a glass substrate, and made into a film having a thickness of 100 *µ*m with an applicator and UV-cured to obtain an inorganic oxide fine particle-containing transparent cured film.

### Example 1-14

### Crystal System Change Between Before and After Firing of Coated YSZ Particles 1

The coated YSZ particles 1 (1 g, tetragonal crystals/monoclinic crystals = 91/9) obtained in Example 1-1 were weighed in a boat for combustion and fired at 1000° C for 3 hours. When the crystal structure of the ash of the collected coated YSZ particles 1 was examined, tetragonal crystals/monoclinic crystals was confirmed to be 28/72.

### Example 1-15

### Crystal System Change Between Before and After Firing of Coated YSZ Particles 2

The coated YSZ particles 2 (1 g, tetragonal crystals/monoclinic crystals = 94/6) obtained in Example 1-2 were weighed in a boat for combustion and fired at 1000° C for 3 hours. When the crystal structure of the collected ash of the coated YSZ particles 2 was examined, tetragonal crystals/monoclinic crystals was comfirmed to be 98/2, and it was confirmed that the crystal system hardly changed.

### Example 1-16

### Crystal System Change Between Before and After Firing of Coated YSZ Particles 3

The coated YSZ particles 3 (1 g, tetragonal crystals/monoclinic crystals = 100/0) obtained in Example 1-3 were weighed in a boat for combustion and fired at 1000° C for 3 hours. When the crystal structure of the collected ash of the coated YSZ particles 3 was confirmed, tetragonal crystals/monoclinic crystals was comfirmed to be 100/0, and it was confirmed that the crystal system did not change at all.

### Comparative Example 1-2

### Crystal System Change Between Before and After Firing of Coated ZrO₂ Particles

The coated ZrO₂ particles (1 g, tetragonal crystals/monoclinic crystals = 74/26) obtained in Comparative Example 1-1 were weighed in a boat for combustion and fired at 1000° C for 3 hours. When the crystal structure of the collected ash of the coated ZrO₂ particles was confirmed, tetragonal crystals/monoclinic crystals was comfirmed to be 12/88, and it was confirmed that the crystal system greatly changed.

### Example 2-1

### Production of Lanthanum-Containing Zirconia Nanoparticles Coated with 2-Ethylhexanoic Acid and/or Carboxylate Derived from 2-Ethylhexanoic Acid

Lanthanum(III) 2-ethylhexanoate (19 g, with a content of lanthanum of 7% by mass, manufactured by Wako Pure Chemical Industries, Ltd.) and pure water (16 g) were mixed into a solution of zirconium 2-ethylhexanoate in mineral spirit (83 g, with a content of zirconium of 12% by mass, manufactured by Daiichi Kigenso Kagaku Kogyo Co., Ltd.), and the mixture was charged in a 200 mL hydrothermal synthesis vessel. The vessel was heated to 190° C and kept at that temperature for 8 hours to carry out the reaction. The pressure during hydrothermal synthesis was 1.4 MPaG (gauge pressure). The mixed solution after the reaction was taken out, and the solvent was removed to collect 14 g of white lanthanum-containing zirconium oxide nanoparticles.

When the crystal structure of the lanthanum-containing zirconia nanoparticles was analyzed according to the "(1) Analysis of Crystal Structure" described above, diffraction lines attributed to tetragonal crystals or cubic crystals were detected, and the crystallite diameter measured according to the "(3) Calculation of Crystallite Diameter by X-Ray Diffraction Analysis" was 3 nm.

The mass reduction rate of the coated lanthanum-containing zirconium oxide nanoparticles determined according to the "(4) Determination of Weight (Mass) Reduction Rate" was 24% by mass. Accordingly, it turned out that the amount of the 2-ethylhexanoic acid and/or carboxylate derived from the 2-ethylhexanoic acid coating the lanthanum-containing zirconium oxide nanoparticles was 24% by mass of the entire coated lanthanum-containing zirconium oxide nanoparticles.

Furthermore, the weight ratio of presence of zirconium and lanthanum in the lanthanum-containing zirconium oxide particles measured according to the "(6) Fluorescent X-Ray Analysis" was 89:10.

### Example 2-2

### Production of Tin-Containing Zirconia Nanoparticles Coated with 2-Ethylhexanoic Acid and/or Carboxylate Derived from 2-Ethylhexanoic Acid

Synthesis was performed in the same manner as in Example 2-1, except for using tin(II) 2-ethylhexanoate (4.9 g, with a content of tin of 29% by mass, manufactured by Wako Pure Chemical Industries, Ltd.) in place of lanthanum(III) 2-ethylhexanoate in Example 2-1. After the reaction, 14 g of white tin-containing zirconium oxide nanoparticles were collected.

When the crystal structure of the tin-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 3 nm.

The mass reduction rate of the coated tin-containing zirconium oxide nanoparticles determined according to the "(4) Determination of Weight (Mass) Reduction Rate" was 25% by mass. Accordingly, it turned out that the amount of the 2-ethylhexanoic acid and/or carboxylate derived from the 2-ethylhexanoic acid coating the tin-containing zirconium oxide nanoparticles was 25% by mass of the entire coated tin-containing zirconium oxide nanoparticles.

Furthermore, the weight ratio of presence of zirconium and tin in the tin-containing zirconium oxide particles measured according to the "(6) Fluorescent X-Ray Analysis" was 87:13.

### Example 2-3-1

### Production of Zinc-Containing Zirconia Nanoparticles Coated with 2-Ethylhexanoic Acid and/or Carboxylate Derived from 2-Ethylhexanoic Acid

Synthesis was performed in the same manner as in Example 2-1, except for using zinc(II) 2-ethylhexanoate (6.6 g, with a content of zinc of 15% by mass, manufactured by Wako Pure Chemical Industries, Ltd.) in place of lanthanum(III) 2-ethylhexanoate in Example 2-1. After the reaction, 14 g of white zinc-containing zirconium oxide nanoparticles were collected.

When the crystal structure of the zinc-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated zinc-containing zirconium oxide nanoparticles determined according to the "(4) Determination of Weight (Mass) Reduction Rate" was 26% by mass. Accordingly, it turned out that the amount of the 2-ethylhexanoic acid and/or carboxylate derived from the 2-ethylhexanoic acid coating the zinc-containing zirconium oxide nanoparticles was 26% by mass of the entire coated zinc-containing zirconium oxide nanoparticles.

Furthermore, the weight ratio of presence of zirconium and zinc in the zinc-containing zirconium oxide particles measured according to the "(6) Fluorescent X-Ray Analysis" was 90:9.

### Example 2-3-2

Synthesis was performed in the same manner as in Example 2-3-1, except for using 0.66 g of zinc(II) 2-ethylhexanoate in Example 2-3-1. After the reaction, 13 g of white zinc-containing zirconium oxide nanoparticles were collected.

Furthermore, the weight ratio of presence of zirconium and zinc in the zinc-containing zirconium oxide particles measured according to the "(6) Fluorescent X-Ray Analysis" was 98:1.

### Example 2-3-3

Synthesis was performed in the same manner as in Example 2-3-1, except for using 1.3 g of zinc(II) 2-ethylhexanoate in Example 2-3-1. After the reaction, 14 g of white zinc-containing zirconium oxide nanoparticles were collected.

Furthermore, the weight ratio of presence of zirconium and zinc in the zinc-containing zirconium oxide particles measured according to the "(6) Fluorescent X-Ray Analysis" was 97:2.

### Example 2-3-4

Synthesis was performed in the same manner as in Example 2-3-1, except for using 2.6 g of zinc(II) 2-ethylhexanoate in Example 2-3-1. After the reaction, 14 g of white zinc-containing zirconium oxide nanoparticles were collected.

Furthermore, the weight ratio of presence of zirconium and zinc in the zinc-containing zirconium oxide particles measured according to the "(6) Fluorescent X-Ray Analysis" was 95:4.

### Example 2-4

### Production of Cerium-Containing Zirconia Nanoparticles Coated with 2-Ethylhexanoic Acid and/or Carboxylate Derived from 2-Ethylhexanoic Acid

Synthesis was performed in the same manner as in Example 2-1, except for using cerium(III) 2-ethylhexanoate ALFA AESAR (14 g, with a content of cerium of 12% by mass, registered trademark, manufactured by Johnson Matthey Japan G.K.) in place of lanthanum(III) 2-ethylhexanoate in Example 2-1. After the reaction, 15 g of yellow-brown cerium-containing zirconium oxide nanoparticles were collected.

When the crystal structure of the cerium-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated cerium-containing zirconium oxide nanoparticles determined according to the "(4) Determination of Weight (Mass) Reduction Rate" was 26% by mass. Accordingly, it turned out that the amount of the 2-ethylhexanoic acid and/or carboxylate derived from the 2-ethylhexanoic acid coating the cerium-containing zirconium oxide nanoparticles was 26% by mass of the entire coated cerium-containing zirconium oxide nanoparticles.

Furthermore, the weight ratio of presence of zirconium and cerium in the cerium-containing zirconium oxide particles measured according to the "(6) Fluorescent X-Ray Analysis" was 88:12.

### Example 2-5

### Production of Indium-Containing Zirconia Nanoparticles Coated with 2-Ethylhexanoic Acid and/or Carboxylate Derived from 2-Ethylhexanoic Acid

Synthesis was performed in the same manner as in Example 2-1, except for using indium(III) 2-ethylhexanoate (28 g, with a content of indium of 5% by mass, manufactured by Wako Pure Chemical Industries, Ltd.) in place of lanthanum(III) 2-ethylhexanoate in Example 2-1. After the reaction, 14 g of white indium-containing zirconium oxide nanoparticles were collected.

When the crystal structure of the indium-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 5 nm.

The mass reduction rate of the coated indium-containing zirconium oxide nanoparticles determined according to the "(4) Determination of Weight (Mass) Reduction Rate" was 27% by mass. Accordingly, it turned out that the amount of the 2-ethylhexanoic acid and/or carboxylate derived from the 2-ethylhexanoic acid coating the indium-containing zirconium oxide nanoparticles was 27% by mass of the entire coated indium-containing zirconium oxide nanoparticles.

Furthermore, the weight ratio of presence of zirconium and indium in the indium-containing zirconium oxide particles measured according to the "(6) Fluorescent X-Ray Analysis" was 86:14.

### Example 2-6

### Production of Bismuth-Containing Zirconia Nanoparticles Coated with 2-Ethylhexanoic Acid and/or Carboxylate Derived from 2-Ethylhexanoic Acid

Synthesis was performed in the same manner as in Example 2-1, except for using bismuth(III) 2-ethylhexanoate (10 g, with a content of bismuth of 25% by mass, manufactured by Wako Pure Chemical Industries, Ltd.) in place of lanthanum(III) 2-ethylhexanoate in Example 2-1. After the reaction, 14 g of white bismuth-containing zirconium oxide nanoparticles were collected.

When the crystal structure of the bismuth-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 5 nm.

The mass reduction rate of the coated bismuth-containing zirconium oxide nanoparticles determined according to the "(4) Determination of Weight (Mass) Reduction Rate" was 25% by mass. Accordingly, it turned out that the amount of the 2-ethylhexanoic acid and/or carboxylate derived from the 2-ethylhexanoic acid coating the bismuth-containing zirconium oxide nanoparticles was 25% by mass of the entire coated bismuth-containing zirconium oxide nanoparticles.

Furthermore, the weight ratio of presence of zirconium and bismuth in the bismuth-containing zirconium oxide particles measured according to the "(6) Fluorescent X-Ray Analysis" was 80:20.

### Example 2-7

### Production of Iron-Containing Zirconia Nanoparticles Coated with 2-Ethylhexanoic Acid and/or Carboxylate Derived from 2-Ethylhexanoic Acid

Synthesis was performed in the same manner as in Example 2-1, except for using iron(III) 2-ethylhexanoate (3.0 g, with a content of iron of 6% by mass, manufactured by Wako Pure Chemical Industries, Ltd.) in place of lanthanum(III) 2-ethylhexanoate in Example 2-1. After the reaction, 14 g of red-brown iron-containing zirconium oxide nanoparticles were collected.

When the crystal structure of the iron-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 5 nm.

The mass reduction rate of the coated iron-containing zirconium oxide nanoparticles determined according to the "(4) Determination of Weight (Mass) Reduction Rate" was 23% by mass. Accordingly, it turned out that the amount of the 2-ethylhexanoic acid and/or carboxylate derived from the 2-ethylhexanoic acid coating the iron-containing zirconium oxide nanoparticles was 23% by mass of the entire coated iron-containing zirconium oxide nanoparticles.

Furthermore, the weight ratio of presence of zirconium and iron in the iron-containing zirconium oxide particles measured according to the "(6) Fluorescent X-Ray Analysis" was 96:3.

### Example 2-8-1

### Production of Cobalt-Containing Zirconia Nanoparticles Coated with 2-Ethylhexanoic Acid and/or Carboxylate Derived from 2-Ethylhexanoic Acid

Synthesis was performed in the same manner as in Example 2-1, except for using cobalt(II) 2-ethylhexanoate (1.8 g, with a content of cobalt of 11% by mass, manufactured by Sigma-Aldrich) in place of lanthanum(III) 2-ethylhexanoate in Example 2-1. After the reaction, 14 g of purple cobalt-containing zirconium oxide nanoparticles were collected.

When the crystal structure of the cobalt-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated cobalt-containing zirconium oxide nanoparticles determined according to the "(4) Determination of Weight (Mass) Reduction Rate" was 25% by mass. Accordingly, it turned out that the amount of the 2-ethylhexanoic acid and/or carboxylate derived from the 2-ethylhexanoic acid coating the cobalt-containing zirconium oxide nanoparticles was 25% by mass of the entire coated cobalt-containing zirconium oxide nanoparticles.

Furthermore, the weight ratio of presence of zirconium and cobalt in the cobalt-containing zirconium oxide particles measured according to the "(6) Fluorescent X-Ray Analysis" was 96:3.

### Example 2-8-2

### Production of Cobalt-Containing Zirconia Nanoparticles Coated with 2-Ethylhexanoic Acid and/or Carboxylate Derived from 2-Ethylhexanoic Acid

Synthesis was performed in the same manner as in Example 2-1, except for using cobalt(II) 2-ethylhexanoate (6.4 g, with a content of cobalt of 11% by mass, manufactured by Sigma-Aldrich) in place of lanthanum(III) 2-ethylhexanoate in Example 2-1. After the reaction, 15 g of purple cobalt-containing zirconium oxide nanoparticles were collected.

When the crystal structure of the cobalt-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated cobalt-containing zirconium oxide nanoparticles determined according to the "(4) Determination of Weight (Mass) Reduction Rate" was 25% by mass. Accordingly, it turned out that the amount of the 2-ethylhexanoic acid and/or carboxylate derived from the 2-ethylhexanoic acid coating the cobalt-containing zirconium oxide nanoparticles was 25% by mass of the entire coated cobalt-containing zirconium oxide nanoparticles.

Furthermore, the weight ratio of presence of zirconium and cobalt in the cobalt-containing zirconium oxide particles measured according to the "(6) Fluorescent X-Ray Analysis" was 89:10.

### Example 2-9

### Production of Manganese-Containing Zirconia Nanoparticles Coated with 2-Ethylhexanoic Acid and/or Carboxylate Derived from 2-Ethylhexanoic Acid

Synthesis was performed in the same manner as in Example 2-1, except for using manganese(II) 2-ethylhexanoate (2.4 g, with a content of manganese of 8% by mass, manufactured by Wako Pure Chemical Industries, Ltd.) in place of lanthanum(III) 2-ethylhexanoate in Example 2-1. After the reaction, 14 g of purple manganese-containing zirconium oxide nanoparticles were collected.

When the crystal structure of the manganese-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated manganese-containing zirconium oxide nanoparticles determined according to the "(4) Determination of Weight (Mass) Reduction Rate" was 25% by mass. Accordingly, it turned out that the amount of the 2-ethylhexanoic acid and/or carboxylate derived from the 2-ethylhexanoic acid coating the manganese-containing zirconium oxide nanoparticles was 25% by mass of the entire coated manganese-containing zirconium oxide nanoparticles.

Furthermore, the weight ratio of presence of zirconium and manganese in the manganese-containing zirconium oxide particles measured according to the "(6) Fluorescent X-Ray Analysis" was 96:3.

### Example 2-10

### Production of Nickel-Containing Zirconia Nanoparticles Coated with 2-Ethylhexanoic Acid and/or Carboxylate Derived from 2-Ethylhexanoic Acid

Synthesis was performed in the same manner as in Example 2-1, except for using nickel(II) 2-ethylhexanoate (2.0 g, with a content of nickel of 10% by mass, manufactured by NIHON KAGAKU SANGYO CO., LTD.) in place of lanthanum(III) 2-ethylhexanoate in Example 2-1. After the reaction, 14 g of light red nickel-containing zirconium oxide nanoparticles were collected.

When the crystal structure of the nickel-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated nickel-containing zirconium oxide nanoparticles determined according to the "(4) Determination of Weight (Mass) Reduction Rate" was 25% by mass. Accordingly, it turned out that the amount of the 2-ethylhexanoic acid and/or carboxylate derived from the 2-ethylhexanoic acid coating the nickel-containing zirconium oxide nanoparticles was 25% by mass of the entire coated nickel-containing zirconium oxide nanoparticles.

Furthermore, the weight ratio of presence of zirconium and nickel in the nickel-containing zirconium oxide particles measured according to the "(6) Fluorescent X-Ray Analysis" was 96:3.

### Example 2-11-1

### Production of Copper-Containing Zirconia Nanoparticles Coated with 2-Ethylhexanoic Acid and/or Carboxylate Derived from 2-Ethylhexanoic Acid, and Neodecanoic Acid and/or Carboxylate Derived from Neodecanoic Acid

Synthesis was performed in the same manner as in Example 2-1, except for using copper(II) neodecanoate (4.5 g, with a content of copper of 5% by mass, manufactured by NIHON KAGAKU SANGYO CO., LTD.) in place of lanthanum(III) 2-ethylhexanoate in Example 2-1. After the reaction, 14 g of dark green copper-containing zirconium oxide nanoparticles were collected.

When the crystal structure of the copper-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated copper-containing zirconium oxide nanoparticles determined according to the "(4) Determination of Weight (Mass) Reduction Rate" was 27% by mass. Accordingly, it turned out that the amount of the 2-ethylhexanoic acid and/or carboxylate derived from the 2-ethylhexanoic acid and neodecanoic acid and/or carboxylate derived from neodecanoic acid, the acids and carboxylates coating the copper-containing zirconium oxide nanoparticles, was 27% by mass of the entire coated copper-containing zirconium oxide nanoparticles.

Furthermore, the weight ratio of presence of zirconium and copper in the copper-containing zirconium oxide particles measured according to the "(6) Fluorescent X-Ray Analysis" was 96:3.

### Example 2-11-2

### Production of Copper-Containing Zirconia Nanoparticles Coated with 2-Ethylhexanoic Acid and/or Carboxylate Derived from 2-Ethylhexanoic Acid, and Neodecanoic Acid and/or Carboxylate Derived from Neodecanoic Acid

Synthesis was performed in the same manner as in Example 2-1, except for using copper(II) neodecanoate (15 g, with a content of copper of 5% by mass, manufactured by NIHON KAGAKU SANGYO CO., LTD.) in place of lanthanum(III) 2-ethylhexanoate in Example 2-1. After the reaction, 16 g of dark green copper-containing zirconium oxide nanoparticles were collected.

When the crystal structure of the copper-containing zirconia nanoparticles was analyzed according to the "(1) Analysis of Crystal Structure" described above, diffraction lines attributed to tetragonal and monoclinic crystals were detected, and the crystallite diameter measured according to the "(3) Calculation of Crystallite Diameter by X-Ray Diffraction Analysis" was 4 nm.

The mass reduction rate of the coated copper-containing zirconium oxide nanoparticles determined according to the "(4) Determination of Weight (Mass) Reduction Rate" was 28% by mass. Accordingly, it turned out that the amount of the 2-ethylhexanoic acid and/or carboxylate derived from the 2-ethylhexanoic acid and neodecanoic acid and/or carboxylate derived from neodecanoic acid, the acids and carboxylates coating the copper-containing zirconium oxide nanoparticles, was 28% by mass of the entire coated copper-containing zirconium oxide nanoparticles.

Furthermore, the weight ratio of presence of zirconium and copper in the copper-containing zirconium oxide particles measured according to the "(6) Fluorescent X-Ray Analysis" was 90:9.

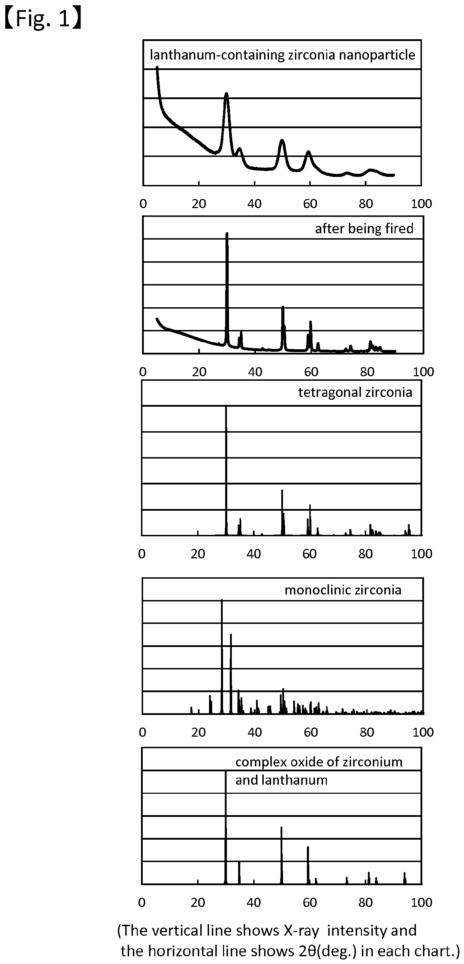

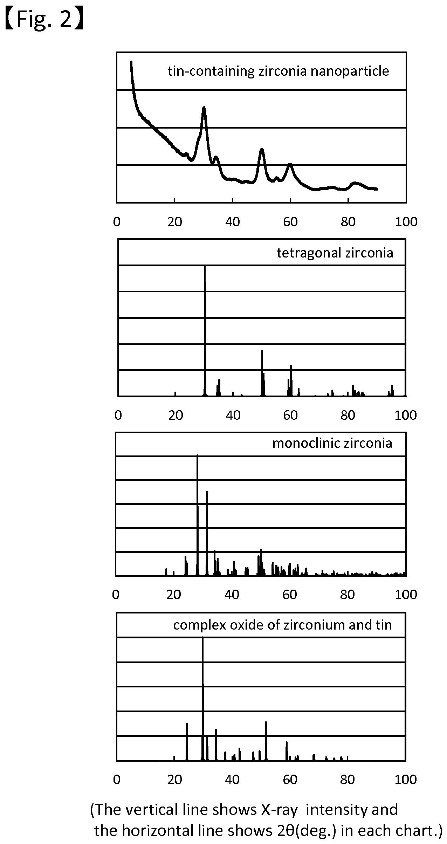

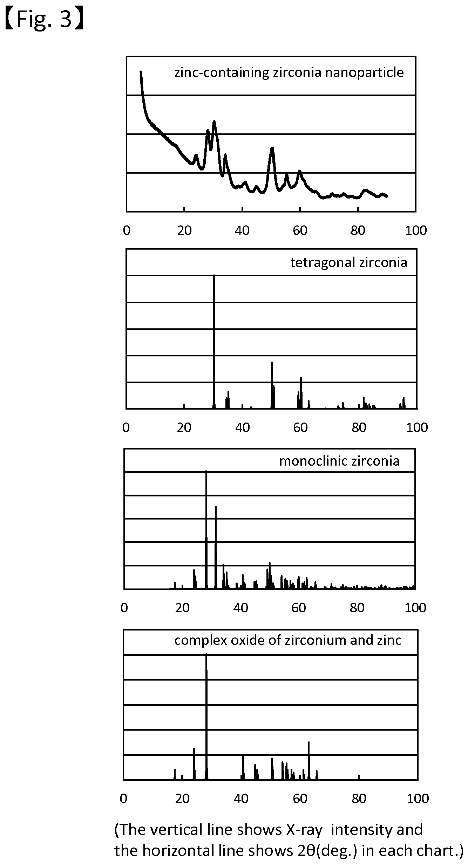

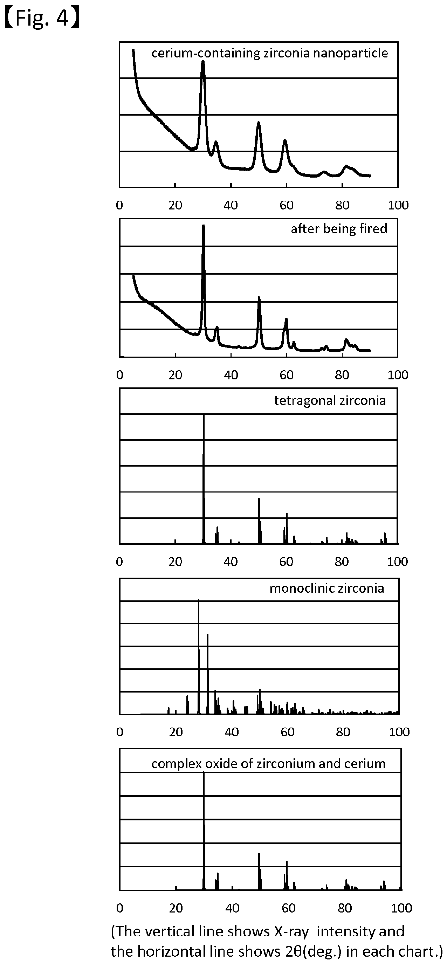

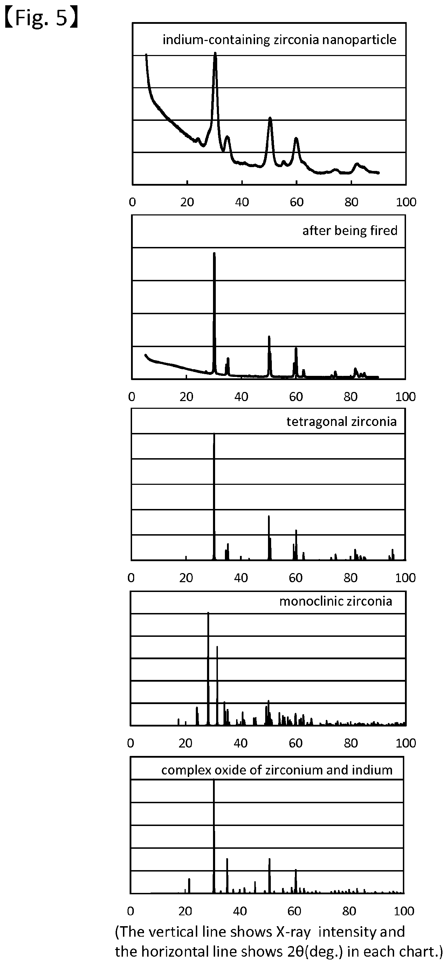

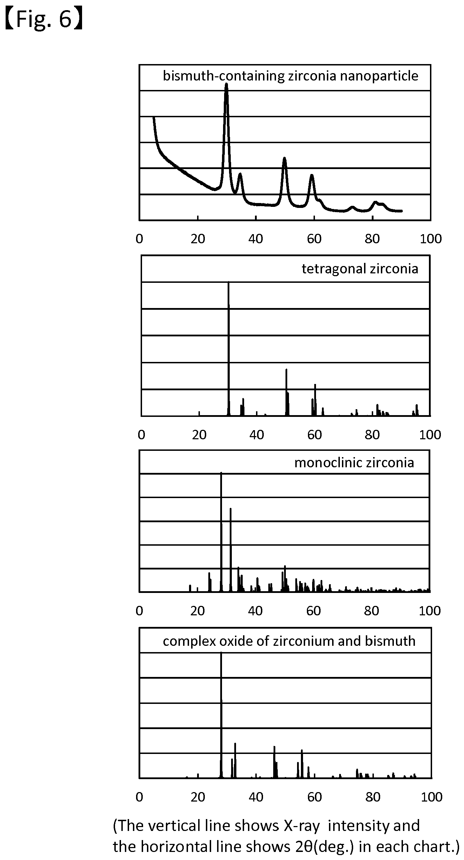

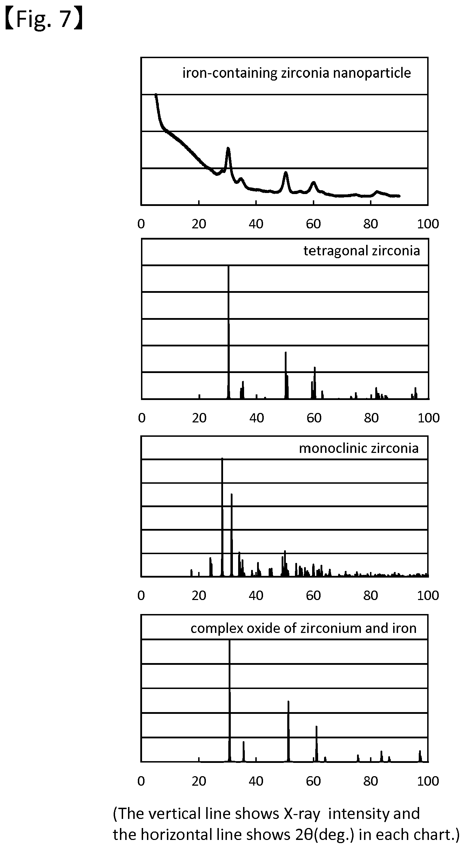

Figs. 1 to 7 each show X-ray diffraction charts, which are analyzed according to the "(1) Analysis of Crystal Structure", of zirconia nanoparticles containing each of the metallic elements M. For the lanthanum-containing zirconia nanoparticles of Example 2-1, the cerium-containing zirconia nanoparticles of Example 2-4, and the indium-containing zirconia nanoparticles of Example 2-5, the crystal structures of ceramic materials obtained by firing these particles at 1000° C for 2 hours were also analyzed.

It turned out that any metallic elements M exist as complex oxides of zirconium and the metallic elements M in the state of nanoparticles. Furthermore, it turned out that lanthanum, cerium and indium exist as complex oxides of these elements and zirconium even after the firing and have the effect of stabilizing the tetragonal zirconium oxide even after the firing.

### Example 3-1

### Production of Iron-Containing Yttria-Stabilized Zirconia Particles coated with 2-Ethylhexanoic Acid and/or Carboxylate Derived from 2-Ethylhexanoic Acid

Yttrium(III) 2-ethylhexanoate (3.66 g, with a content of yttrium of 17% by mass, manufactured by NIHON KAGAKU SANGYO CO., LTD.), iron(II) 2-ethylhexanoate (0.35 g, with a content of iron of 6% by mass, manufactured by Wako Pure Chemical Industries, Ltd.) and pure water (15.8 g) were mixed into a solution of zirconium 2-ethylhexanoate in mineral spirit (83.0 g, with a content of zirconium of 12% by mass, manufactured by Daiichi Kigenso Kagaku Kogyo Co., Ltd.), and the mixture was charged in a 200 mL hydrothermal synthesis vessel. The vessel was heated to 190° C and kept at that temperature for 8 hours to carry out the reaction. The pressure during hydrothermal synthesis was 1.4 MPaG (gauge pressure). The mixed solution after the reaction was taken out and separated, and the aqueous phase was removed, whereby a nanoparticle dispersion was obtained. The solution was depressurized to remove the organic solvent, and the resulting material was dried at 180°C, thereby to collect 18 g of pale yellow coated iron-containing yttria-stabilized zirconia nanoparticles. The yttria-stabilized zirconia herein means zirconia whose crystal structure is stabilized by yttria, and is hereinafter referred to as YSZ.

When the crystal structure of the coated iron-containing YSZ nanoparticles was analyzed according to the "(1) Analysis of Crystal Structure" described above, the ratio of tetragonal crystals/monoclinic crystals was 97/3. Incidentally, since it is difficult to distinguish between cubic and tetragonal crystals by X-ray diffraction measurement, the proportion of the cubic crystals is counted as the proportion of the tetragonal crystals even in the cases where cubic crystals exist.

The crystallite diameter of the coated iron-containing YSZ particles measured according to the "(3) Calculation of Crystallite Diameter by X-Ray Diffraction" described above was 5 nm.

The mass reduction rate of the coated iron-containing YSZ nanoparticles determined according to the "(4) Determination of Weight (Mass) Reduction Rate" described above was 25% by mass. Accordingly, it turned out that the amount of the 2-ethylhexanoic acid and/or carboxylate derived from the 2-ethylhexanoic acid coating the coated iron-containing YSZ nanoparticles was 25% by mass of the entire coated iron-containing YSZ nanoparticles.

The weight ratio of presence of zirconium, yttrium and iron in the coated iron-containing YSZ nanoparticles determined according to the "(6) Fluorescent X-Ray Analysis" was 94:5.7:0.2.

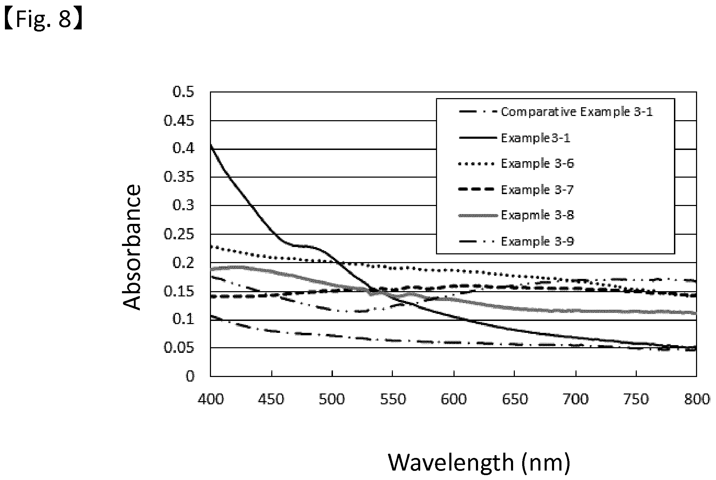

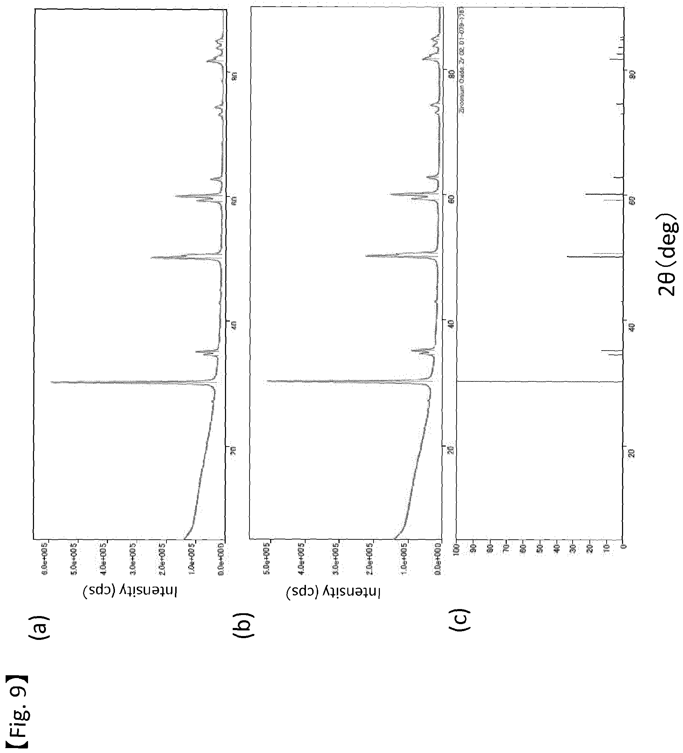

Furthermore, the sample obtained by firing the resulting coated iron-containing YSZ nanoparticles at 1000° C for 3 hours had a yellow color as apparent from the results of the absorbance measurement shown in Fig. 8, and was uniformly colored. Also, when the crystal structure was analyzed according to the "(1) Analysis of Crystal Structure", the pattern of Fig. 9 (a) was obtained, and the same pattern as the tetragonal YSZ (Fig. 9 (b)) shown in the comparative example described later was obtained, and the proportion of tetragonal crystals was 100%. Fig. 9 (c) is an X-ray diffraction pattern of tetragonal zirconium oxide.

### Example 3-2

The same procedure as in Example 3-1 was carried out except for using 0.18 g of the iron(II) 2-ethylhexanoate of Example 3-1, to collect 18 g of pale yellow coated iron-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and iron in the coated iron-containing YSZ nanoparticles determined according to the "(6) Fluorescent X-Ray Analysis" was 94:5.8:0.1. The sample obtained by firing the resulting coated iron-containing YSZ nanoparticles at 1000° C for 3 hours had a pale yellow color lighter than the color of the sample in Example 3-1, and was uniformly colored. The proportion of tetragonal crystals of the crystal structure was 100%.

### Example 3-3

The same procedure as in Example 3-1 was carried out except for using 0.7 g of the iron(II) 2-ethylhexanoate of Example 3-1, to collect 18 g of pale yellow coated iron-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and iron in the coated iron-containing YSZ nanoparticles determined according to the "(6) Fluorescent X-Ray Analysis" was 94:5.7:0.4. The sample obtained by firing the resulting coated iron-containing YSZ nanoparticles at 1000° C for 3 hours had a pale yellow color darker than the color of the sample in Example 3-1, and was uniformly colored. The proportion of tetragonal crystals of the crystal structure was 100%.

### Example 3-4

The same procedure as in Example 3-1 was carried out except for using 1.4 g of the iron(II) 2-ethylhexanoate of Example 3-1, to collect 19 g of yellow coated iron-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and iron in the coated iron-containing YSZ nanoparticles determined according to the "(6) Fluorescent X-Ray Analysis" was 94:5.7:0.8. The sample obtained by firing the resulting coated iron-containing YSZ nanoparticles at 1000° C for 3 hours had a brown color, and was uniformly colored.

### Example 3-5

The same procedure as in Example 3-1 was carried out except for using 2.8 g of the iron(II) 2-ethylhexanoate of Example 3-1, to collect 19 g of brown coated iron-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and iron in the coated iron-containing YSZ nanoparticles determined according to the "(6) Fluorescent X-Ray Analysis" was 94:5.6:1.5. The sample obtained by firing the resulting coated iron-containing YSZ nanoparticles at 1000° C for 3 hours had a brown color, and was uniformly colored.

### Example 3-6

The same procedure as in Example 3-1 was carried out except for using 0.2 g of cobalt(II) 2-ethylhexanoate (manufactured by Sigma-Aldrich, a 65% solution in mineral spirit) in place of the iron(II) 2-ethylhexanoate of Example 3-1, to collect 18 g of brown coated cobalt-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and cobalt in the coated cobalt-containing YSZ nanoparticles determined according to the "(6) Fluorescent X-Ray Analysis" was 94:5.7:0.2. The absorbance measurement results of the sample obtained by firing the resulting coated cobalt-containing YSZ nanoparticles at 1000° C for 3 hours are as shown in Fig. 8, and the sample had a gray color and was uniformly colored. The proportion of tetragonal crystals of the crystal structure was 100%.

### Example 3-7

The same procedure as in Example 3-1 was carried out except for using 0.3 g of manganese 2-ethylhexanoate (manufactured by NIHON KAGAKU SANGYO CO., LTD., trade name: Nikka Octhix Manganese 8%) in place of the iron(II) 2-ethylhexanoate of Example 3-1, to collect 18 g of purple coated manganese-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and manganese in the coated manganese-containing YSZ nanoparticles determined according to the "(6) Fluorescent X-Ray Analysis" was 94:5.7:0.2. The absorbance measurement results of the sample obtained by firing the resulting coated manganese-containing YSZ nanoparticles at 1000° C for 3 hours are as shown in Fig. 8, and the sample had a gray color and was uniformly colored. The proportion of tetragonal crystals of the crystal structure was 100%.

### Example 3-8

The same procedure as in Example 3-1 was carried out except for using 0.2 g of nickel 2-ethylhexanoate (manufactured by NIHON KAGAKU SANGYO CO., LTD., trade name: Nikka Octhix Nickel 10%) in place of the iron(II) 2-ethylhexanoate of Example 3-1, to collect 18 g of pale yellow coated nickel-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and nickel in the coated nickel-containing YSZ nanoparticles determined according to the "(6) Fluorescent X-Ray Analysis" was 94:5.8:0.2. The absorbance measurement results of the sample obtained by firing the resulting coated nickel-containing YSZ nanoparticles at 1000° C for 3 hours are as shown in Fig. 8, and the sample had a pale yellow color and was uniformly colored. The proportion of tetragonal crystals of the crystal structure was 100%.

### Example 3-9

The same procedure as in Example 3-1 was carried out except for using 0.5 g of copper neodecanoate (manufactured by NIHON KAGAKU SANGYO CO., LTD., trade name: Copper Neodecanoate 5%) in place of the iron(II) 2-ethylhexanoate of Example 3-1, to collect 18 g of green coated copper-containing YSZ nanoparticles.

The ratio of tetragonal crystals to monoclinic crystals measured according to the "(1) Analysis of Crystal Structure" was 97/3, and the crystallite diameter measured according to the "(3) Calculation of Crystallite Diameter by X-Ray Diffraction Analysis" was 5 nm. The weight ratio of presence of zirconium, yttrium and copper in the coated copper-containing YSZ nanoparticles determined according to the "(6) Fluorescent X-Ray Analysis" was 94:5.7:0.2. The absorbance measurement results of the sample obtained by firing the resulting coated cobalt-containing YSZ nanoparticles at 1000° C for 3 hours are as shown in Fig. 8, and the sample had a green color and was uniformly colored. The proportion of tetragonal crystals of the crystal structure was 100%.

### Comparative Example 3-1

### Production of YSZ Particles Coated with 2-Ethylhexanoic Acid and/or Carboxylate Derived from 2-Ethylhexanoic Acid

The same procedure as in Example 3-1 was carried out except for not using the iron(II) 2-ethylhexanoate of Example 3-1, to collect 18 g of white coated YSZ nanoparticles.

The mass reduction rate of the coated YSZ nanoparticles determined according to the "(4) Determination of Weight (Mass) Reduction Rate" described above was 25% by mass. Accordingly, it turned out that the amount of the 2-ethylhexanoic acid and/or carboxylate derived from the 2-ethylhexanoic acid coating the coated YSZ nanoparticles was 25% by mass of the entire coated YSZ nanoparticles.

When the crystal structure of the coated YSZ nanoparticles was analyzed according to the "(1) Analysis of Crystal Structure" described above, the ratio of tetragonal crystals/monoclinic crystals was 97/3.

The weight ratio of presence of zirconium and yttrium in the coated iron-containing YSZ nanoparticles determined according to the "(6) Fluorescent X-Ray Analysis" was 94:5.8.

Furthermore, the sample obtained by firing the resulting coated YSZ nanoparticles at 1000° C had a white color, and when the crystal structure of the sample was analyzed according to the "(1) Analysis of Crystal Structure", the proportion of tetragonal crystals was 100%.

### INDUSTRIAL APPLICABILITY

Because of their good dispersibility, the zirconium oxide nanoparticles of the present invention can be suitably used as: optical films (or sheets) such as antireflection films, hard coat films, brightness enhancement films, prism films, lenticular sheets and microlens sheets; optical refractive index adjusting agents; optical adhesive materials; optical waveguides; lenses; catalysts; CMP polishing compositions; electrodes; capacitors; inkjet recording methods; piezoelectric elements; light extraction improving agents such as LED, OLED and organic EL; antibacterial agents; dental adhesives; light collecting structures used for a solar cell panel; and color filters. Also, in a preferred embodiment, in addition to good dispersibility, the change in the crystal structure between before and after firing is suppressed, so that the zirconium oxide nanoparticles of the present invention can also be suitably used for ceramic materials such as materials for dentures. Also because of their good dispersibility, the zirconium oxide nanoparticles of the particular present invention containing Y and at least one selected from the group consisting of Fe, Co, Mn, Ni and Cu are uniformly colored when fired and can produce natural color tone, so that they can also be suitably used for ceramic materials such as ceramic glazes, artificial jewelry, and dental materials.

## Claims

1. A zirconium oxide nanoparticle coated with a first carboxylic acid that is at least one of primary carboxylic acids and secondary carboxylic acids and has 3 or more carbon atoms, wherein
the zirconium oxide nanoparticle comprises at least one selected from the group M consisting of rare earth elements, Al, Fe, Co, Sn, Zn, In, Bi, Mn, Ni, and Cu.

2. The zirconium oxide nanoparticle according to claim 1, wherein the first carboxylic acid is at least one selected from the group consisting of secondary carboxylic acids, carboxylic acids in which at least one carbon atom other than one at *α*-position is branched, and linear carboxylic acids having 4 to 20 carbon atoms.

3. The zirconium oxide nanoparticle according to claim 1 or 2, comprising at least one selected from the group consisting of Y, Al, La, Ce and In, among the elements belonging to the group M.

4. The zirconium oxide nanoparticle according to claim 1 or 2, comprising Y, and further comprising at least one selected from the group consisting of Fe, Co, Mn, Ni and Cu, among the elements belonging to the group M.

5. The zirconium oxide nanoparticle according to claim 1 or 2, comprising at least one selected from the group Mₐ consisting of rare earth elements and Al, among the elements belonging to the group M, wherein a total content of elements belonging to the group Mₐ is 0.1% by mass or more in terms of a ratio to a total content of the elements belonging to the group Mₐ and zirconium.

6. The zirconium oxide nanoparticle according to claim 1 or 2, comprising at least one selected from the group M_{b} consisting of La, Ce, Fe, Co, Sn, Zn, In, Bi, Mn, Ni and Cu, among the elements belonging to the group M, wherein a total content of elements belonging to the group M_{b} is 0.1 to 20% by mass in terms of a ratio to a total content of the elements belonging to the group M_{b} and zirconium.

7. The zirconium oxide nanoparticle according to any of claims 1 to 6, wherein the zirconium oxide nanoparticle is coated with at least one selected from the group consisting of organic acids other than the first carboxylic acid, silane-coupling agents, surfactants, organophosphorus compounds, and organosulfur compounds.

8. The zirconium oxide nanoparticle according to any of claims 1 to 7, wherein the zirconium oxide nanoparticle is a precursor to a fired body of zirconium oxide.

9. A dispersion comprising the zirconium oxide nanoparticle according to any of claims 1 to 8.

10. A resin composition comprising the zirconium oxide nanoparticle according to any of claims 1 to 8.

11. A molded material comprising the zirconium oxide nanoparticle according to any of claims 1 to 8.

12. A ceramic material obtained from the zirconium oxide nanoparticle according to any of claims 1 to 8.

13. A process for producing a ceramic material, comprising firing the zirconium oxide nanoparticle according to any of claims 1 to 8 at 500° C or more.

14. A method for producing a ceramic material comprising firing a composition containing the zirconium oxide nanoparticle according to any of claims 1 to 8 at 500° C or more.

15. A process for producing the zirconium oxide nanoparticle according to any of claims 1 to 8, comprising,
hydrothermal synthesizing a zirconium source material and a source material of the elements belonging to the group M without using MgSO₄, wherein,
the zirconium source material comprising the first carboxylic acid, and either zirconium or a zirconium-containing compound; and
the source material of the elements belonging to the group M comprising the first carboxylic acid, and at least one of the elements belonging to the group M and compounds containing the elements belonging to the group M.
